# EUROPEAN PATENT SPECIFICATION

(11) **EP 3 662 307 B1**
(45) Date of publication and mention of the grant of the patent: **30.12.2020**
(21) Application number: 18746201.5
(22) Date of filing: 01.08.2018
(51) Int. Cl.: G01T 3/00, G01T 1/17

(54) **METHOD AND SYSTEM FOR PULSE MULTIPLICITY COUNTING WITH DEAD TIME CORRECTION**
VERFAHREN UND SYSTEM FÜR IMPULSMULTIPLIZITÄTSZÄHLUNG MIT TOTZEITKORREKTUR
PROCÉDÉ ET SYSTÈME DE DÉCOMPTE DE LA MULTIPLICITÉ D'IMPULSIONS AVEC CORRECTION DE TEMPS MORT

(30) Priority: 02.08.2017 EP 17184590
(43) Date of publication of application: 10.06.2020
(73) Proprietor: The European Atomic Energy Community (EURATOM), represented by the European Commission, 1049 Brussels (BE)
(72) Inventor: HOLZLEITNER, Ludwig, 76297 Stutensee (DE); SWINHOE, Martyn,Thomas, Los Alamos, NM 87544 (US); HENZLOVA, Daniela, Los Alamos, NM 87544 (US)
(74) Representative: Gevers Patents
(86) International application number: PCT/EP2018/070837
(87) International publication number: WO 2019/025479

(56) References cited:
- WO-A1-2011/032743
- Peter Angelo Santi ET AL: "Implementation and Initial Testing of Advanced Processing and Analysis Algorithms for Correlated Neutron Counting", LA-UR-15-29225, 1 December 2015 (2015-12-01), pages 1-28, XP055443463, Retrieved from the Internet: URL:http://permalink.lanl.gov/object/tr?wh at=info:lanl-repo/lareport/LA-UR-15-29225 [retrieved on 2018-01-23]
- CROFT STEPHEN ET AL: "The effect of deadtime and electronic transients on the predelay bias in neutron coincidence counting", NUCLEAR INSTRUMENTS & METHODS IN PHYSICS RESEARCH. SECTION A: ACCELERATORS, SPECTROMETERS, DETECTORS, AND ASSOCIATED EQUIPMENT, vol. 814, 13 January 2016 (2016-01-13), pages 96-103, XP029419646, ISSN: 0168-9002, DOI: 10.1016/J.NIMA.2016.01.022
- N Ensslin ET AL: "Application guide to Neutron multiplicity counting", Los Alamos Manual - LA-13422-M, 1 November 1998 (1998-11-01), pages 1-114, XP055442965, Retrieved from the Internet: URL:http://permalink.lanl.gov/object/tr?wh at=info:lanl-repo/lareport/LA-13422-M [retrieved on 2018-01-22]

## Description

### Technical field

The present invention generally relates to a pulse counting, and in particular to a method and system for method for pulse multiplicity counting with dead time correction. The invention has particular applicability to neutron multiplicity counting; however, the techniques described herein are applicable also to other pulse counting instruments or devices with similar characteristics.

### Background Art

For the purpose of illustration, the present invention will be described with reference to neutron multiplicity counting. The latter is a technique used for non-destructively assaying the quantity of fissile material, such as uranium (U), plutonium (Pu), californium (Cf), etc. Neutron multiplicity counting is based upon the fact that neutrons from spontaneous or induced fission events are emitted substantially simultaneously. The probabilities of having a 0, 1, 3, etc., neutrons in a fission event (sometimes called the multiplicity distribution) provides a signature of the material under examination.

Neutron multiplicity counting may be considered as a generalization of neutron coincidence counting - which looks for pairs of neutrons that are close together in time - to triples, quadruples and higher order multiples of neutrons. Typically, a neutron detector outputs a train of pulses, each of which represents one detected neutron. The distribution of the pulses in time or the distribution of the time intervals between the pulses, whichever is more convenient, is caused by an a priori unknown combination of spontaneous fission, induced fission (α, n)-reactions and external events. Whereas fission events yield multiple neutrons that are coincident in time, (α, n)-reactions and external events produce neutrons that are randomly distributed in time.

A neutron detector typically comprises a body of polyethylene having a cavity in the middle to accommodate a sample during measurement. Around the cavity, gas proportional counters, often ³He tubes, are embedded in the polyethylene body. If a neutron is emitted from the sample, there is a high probability that it will collide with hydrogen in the polyethylene. Neutrons thus lose energy until thermal equilibrium with the material is reached. A fraction of these thermalised neutrons eventually hit an atom of the gas in one of multiple gas proportionality counters. If a neutron hits a gas atom, a charge is released and collected at the electrode of the tube. The gas proportional counters are connected to preamplifiers, which receive the electric pulses from the gas proportional counters, process them and output them as a pulse train for further processing. Neutron detection can also be carried out using scintillation counters.

The time along a pulse train is continuous but in the following pulse trains are considered as a sequence of discrete time intervals of uniform duration, called "TICs". Each of these time intervals may be empty or contain a pulse. Depending on the instrument used, the pulse train may be provided on a single channel (the output of all preamplifiers being summed on this channel) or on a plurality of synchronized channels. The time along a pulse train is in principle continuous. The analyzing electronics typically works with a certain clock speed (usually given in MHz), cutting this continuous time in a sequence of discrete time intervals of uniform duration (the duration determined by the clock speed), referred to herein as TICs. The analyzing electronics can only recognize whether there is a pulse within such a time interval on a given channel or not; in case there are more pulses within the same TIC on the same channel, only one pulse is recognized there by the electronics. This justifies considering the pulse train as sequence of discrete time intervals, each TIC for each channel containing one pulse or no pulse, even if the time along the pulse train in continuous. The loss of pulse recognition - from the fact that there may be more than one pulse within the same TIC at the same channel - is neglected.

The analysis of a pulse train from a neutron detector (i.e. the distribution of pulses in time) is complex because neutron detectors have a detection efficiency of less than 1 (meaning that only a fraction of the neutrons from a sample is actually detected), many of the apparent coincidences are due to accidental overlaps (of background events, background and fission events or fission events) and neutrons stemming from a single event are not necessarily recorded at the same time (or with a fixed delay between them). It should be noted that the detection efficiency affects not only the overall count rate but also has a much higher impact on the detection of bursts of neutrons (i.e. pairs, triplets, etc., of neutrons from a common fission event). In other words, the observed pulse train from a neutron detector contains many "accidental" but relatively few "real" coincident events.

To study the pulse train from a neutron source, the Rossi-Alpha distribution has proved its usefulness (see e.g. "Passive Non- Destructive Assay of Nuclear Materials" by Reilly, Ensslin and Smith, NUREG/CR- 5550 LA- UR-90732,pp. 457- 488). The Rossi-Alpha distribution is the distribution in time of events that follow after an arbitrary starting event. The Rossi-Alpha distribution may be obtained by fixing an arbitrary pulse from the pulse train as the starting ("trigger") pulse and recording each subsequent pulse in a bin corresponding to the distance from the starting pulse to the subsequent pulse (up to a predetermined maximum distance). (The terms "distance" and "interval" are used herein to designate the length of a time interval and are conveniently expressed in units of TICs.) Then, the next pulse of the pulse train is fixed as the starting pulse and the process is iterated. Each bin of the distribution thus indicates the count of pulses occurring at a particular distance from a starting pulse. If the pulse train contains only random events, the corresponding Rossi-Alpha distribution is constant with time. If, however, real coincidence events are present, the Rossi-Alpha distribution function additionally contains an exponential term with a parameter called the "die-away time" of the detector.

However, a Rossi-Alpha distribution that has been an experimentally determined as described above will be perturbed for short distances from the starting pulse, that is to say, its exponential behaviour holds only for distances exceeding a certain minimum distance. This is well known and is caused by the so-called "dead time effect". After detection of a neutron, a proportional counter tube needs some time to recover (usually about 1 µs). In the meantime, this counter tube cannot generate a further pulse, even if another neutron is captured therein. Similarly, the electronics of the preamplifier need some recovery time after treating a pulse from a counter tube. Due to the recovery time, there is a reduced probability of recording a pulse within a few TICs from a leading pulse. The "dead time" designates the time during which pulses may get lost due to this effect and during which the true coincidence count rate cannot be measured. Each neutron detector has its characteristic dead time. Those skilled in the art are aware that the dead time effect is particularly detrimental to the detection of correlated events as these involve neutrons that are close together in time.

In conventional neutron multiplicity counting, one determines, for a given pulse of the pulse train, the multiplicity (i.e. the number) of pulses within a first and a second gate (time window) triggered by the given pulse, see for example US6333958. The first gate (the "reals- plus- accidentals gate" or "R+A gate") is positioned shortly after the triggering pulse whereas the second gate (the "accidentals gate" or "A gate") is positioned a long delay (typically 1 to 4 ms) after that pulse. Doing this for all pulses of the pulse train, one obtains a histogram of multiplicities or "multiplicity vector" for the R+A gate and another such histogram or vector for the A gate. The R+A multiplicity histogram or vector indicates how many times in the pulse train each multiplicity was determined in the R+A gate. Similarly, the A multiplicity histogram or vector indicates how many times in the pulse train each multiplicity was determined in the A gate. The long delay between each trigger pulse and the A gate is chosen to amount to many times the neutron lifetime in the detector, so that there is no residual correlation between the trigger pulse and the pulses in the corresponding A gate. Accordingly, the distribution of correlated events corresponds to the difference between the R+A multiplicity histogram and the A multiplicity histogram. In the most widespread method, R+A and A multiplicity histograms are used to calculate the "singles" (total count rate), the "doubles" (number of correlated pulse pairs in the pulse train), "triples" (number of sets of three correlated pulses in the pulse train) and higher order "moments".

As mentioned hereinbefore, the dead time effect falsifies the number of pulses during the first TICs after each trigger pulse. These lost pulses have an impact on the multiplicity histograms determined. To reduce their impact, the R+A gate is normally not opened immediately after the triggering pulse but only after a short time interval (the so-called "pre-delay"). Nevertheless, when the singles, doubles, triples, etc., are calculated from the multiplicity histograms, corrections to account of the dead time are still necessary. Different dead time correction methods are currently used. The most popular technique comprises semi-empirical correction for the singles and the doubles, and a method by Dytlewski (N. Dytlewski et al., "Measurement variances in thermal neutron coincidence counting", Nuclear Instr. Methods, A327, pp. 469- 479, 1993) for the triples (see, e.g., Harker and Krick: "INCC Software Users Manual", LA-UR-01-6761, September 2003). These corrections require dedicated calibration measurements to determine certain correction parameters. In general, these methods are adequate for counting rates less than 1 MHz, if the desired measurement accuracy is in the few percent range. Other correction methods have had little in-field use due to the complexity of their formulation. An example of such a correction method is known from WO2011/032743 A1. Indeed said application discloses a method for pulse multiplicity counting with dead-time correction in a neutron detector. It also discloses that said method comprises an estimate of lost pulses due to dead time.

The problems encountered with the correction of dead time impact currently limit the practical use of neutron multiplicity counting to the third order, i.e. to singles, doubles and triples. The use of "quadruples" or "quads" (number of sets of four correlated pulses in the pulse train) has not been greatly pursued, among other reasons due to the lack of a corresponding dead time correction.

It follows from the above that there is a need for pulse counting techniques, especially for neutron detection/counting, with an efficient dead time correction method. It would be desirable that such dead time correction be based upon the collected data themselves - in order to reduce the workload in relation to detector characterization and calibration at the beginning of each measurement or after a change in detector configuration has occurred.

Accordingly is an object of the present invention to provide an improved (neutron) counting method, in particular in respect to the above-mentioned problem with dead time correction. It is a further object to provide correction techniques applicable for higher count-rates than previous available.

### General Description of the Invention

According to one aspect of the invention there is provided a method, as defined by independent claim 1, for pulse multiplicity counting with dead time correction, whereby on each of a plurality of channels a respective detected pulse train ${C}_{i}^{t}$ is received, the method comprising: generating, for the or each channel, an estimate of lost pulses on the channel with a respective assumed dead time period for each channel; obtaining, for the or each channel, a relative efficiency thereof with respect to the sum of efficiencies for all channels; deriving, for the or each channel, a dead-time behaviour, said deriving including generating from the relative efficiency and the estimate of lost pulses, an estimated lost pulse train ${l}_{i}^{t}$ having estimated lost pulses; generating at least a first corrected histogram $\left({m}_{0}^{new},{m}_{1}^{new},{m}_{2}^{new},{m}_{3}^{new},…\right)$ based on the respective detected pulse train ${C}_{i}^{t}$ and the estimated lost pulse train ${l}_{i}^{t}$ for the or each channel, the first corrected histogram indicating, for each of a plurality of multiplicities, a respective count.

Preferably, generating at least a first corrected histogram $\left({m}_{0}^{new},{m}_{1}^{new},{m}_{2}^{new},{m}_{3}^{new},…\right)$ includes summing, for the or each channel, the respective detected pulse train ${C}_{i}^{t}$ and the estimated lost pulse train ${l}_{i}^{t} ,$ to thereby generate a corrected pulse train corrected for dead time in the channel.

Preferably, for a given channel, generating the estimated lost pulse train ${l}_{i}^{t}$ on the channel comprises: detecting a pulse on the given channel; in response to detecting the pulse, measuring the count rate on another of the channels during the respective assumed dead time, and comparing the count rate on the given channel with the measured count rate on the other channels to determine a number of lost pulses; and repeating the measuring and comparing for multiple other channels to generate the estimate of lost pulses on the given channel, the estimate being an average of the determined numbers of lost pulses.

Preferably, for all channels from channel 1 to the maximum number of channels *Ch,* generating the estimated lost pulse train ${\left({l}_{i}^{t},…,{l}_{Ch}^{t}\right)}_{t = 1 , …}$ comprises calculating $\left({l}_{i}^{t},…,{l}_{Ch}^{t}\right)$ by solving for $\left({l}_{i}^{t},…,{l}_{Ch}^{t}\right)$ for each time-step *t* with meaningful (non-zero) right hand side in: $\left(\begin{matrix}1 & - \frac{{p}_{1} \left({τ}_{1}\right) {e}_{1}}{1 - {e}_{1}} & … & - \frac{{p}_{1} \left({τ}_{1}\right) {e}_{1}}{1 - {e}_{1}} \\ - \frac{{p}_{2} \left({τ}_{2}\right) {e}_{2}}{1 - {e}_{2}} & 1 & & ⋮ \\ ⋮ & ⋮ & ⋱ & \\ - \frac{{p}_{Ch} \left({τ}_{Ch}\right) {e}_{Ch}}{1 - {e}_{Ch}} & - \frac{{p}_{Ch} \left({τ}_{Ch}\right) {e}_{Ch}}{1 - {e}_{Ch}} & … & 1\end{matrix}\right) \left(\begin{matrix}{l}_{1}^{t} \\ {l}_{2}^{t} \\ ⋮ \\ {l}_{Ch}^{t}\end{matrix}\right) = \left(\begin{matrix}\frac{{p}_{1} \left({τ}_{1}\right) {e}_{1}}{1 - {e}_{1}} {\sum }_{i \neq 1} {C}_{i}^{t} \\ \frac{{p}_{2} \left({τ}_{2}\right) {e}_{2}}{1 - {e}_{2}} {\sum }_{i \neq 2} {C}_{i}^{t} \\ ⋮ \\ \frac{{p}_{Ch} \left({τ}_{Ch}\right) {e}_{Ch}}{1 - {e}_{Ch}} {\sum }_{i \neq Ch} {C}_{i}^{t}\end{matrix}\right)$ where
${C}_{i}^{t}$ denotes whether there was a pulse observed at channel *i* and time *t*; ${C}_{i}^{t}$ if there was a pulse observed at time *t* at channel *i* and ${C}_{i}^{t} = 0$ else;
*Ch* is the maximum number of channels available;
${l}_{i}^{t}$ denotes the calculated (or estimated) average lost pulse at channel *i* and time *t*;
*eᵢ* denotes the relative efficiency of channel *i* with respect to the sum of all channels and the not dead-time affected pulse train, whereby ${\sum }_{i} {e}_{i} = 1$
- *τᵢ*: denotes the time which elapsed from the last preceding pulse on channel *i*; and
- *pᵢ*(*τ*): denotes a dead-time probability function indicating the probability of a pulse loss due to dead-time on channel *i* depending on the time *τ* which elapsed from the last preceding pulse on that channel.

Preferably, obtaining the dead-time probability functions *pᵢ*(*τ*) necessary for the matrix equation from the preceding paragraph comprises performing an iterative process for gradually adapting the shape of the dead-time probability functions *pᵢ*(*τ*) involving solving the matrix equation from the preceding paragraph for $\left({l}_{i}^{t},…,{l}_{Ch}^{t}\right)$ for each time-step *t* for a predetermined portion of the respective pulse train.

Preferably, the iterative process comprises, for each channel *i*, building, using a predetermined portion of a respective detected pulse train, a first same channel Rossi-Alpha distribution ${RA}_{i}^{Obs . S} \left(τ\right)$ of observed pulses where a trigger pulse occurred on channel *i* and pulses only from channel *i* are recorded, and building, using the predetermined portion, a first other-channels Rossi-Alpha distribution ${RA}_{i}^{Obs . O} \left(τ\right)$ of observed pulses on channels other than on channel *i,* while a trigger pulse occurred on channel *i,* assigning an initial value to an assumed dead-time probability function *pᵢ*(*τ*), applying, on the predetermined portion of a respective detected pulse train, the estimation method for lost pulses as described above, to calculate an estimated lost pulse train (ELPT) for this portion of the detected pulse train; while applying the estimation method, taking for each channel *i* with ${l}_{i}^{t} > 0$ the time-distance *τᵢ* to the last pulse on channel *i* before ${l}_{i}^{t} ,$ using only the time-distance *τᵢ* taken, building up a caused Rossi-Alpha distribution ${RA}_{i}^{Est . C} \left(τ\right)$ of estimated lost pulses ${l}_{i}^{t}$ on channel *i* assumed to be caused by the respective trigger pulse; using the calculated estimated lost pulse train (ELPT) and triggering on pulses from the detected pulse train, building a second same channel Rossi-Alpha distribution ${RA}_{i}^{Est . S} \left(τ\right) ,$ of estimated lost pulses exclusively on channel *i*, and building a second other channels a Rossi-Alpha distribution for estimated lost pulses on channels other than channel *i*; calculating a new dead-time probability function ${p}_{i}^{new} \left(τ\right)$ according to ${p}_{i}^{new} \left(τ\right) = \frac{\frac{{e}_{i}}{1 - {e}_{i}} \left({RA}_{i}^{Obs . O}\left(τ\right)+{RA}_{i}^{Est . O}\left(τ\right)\right) - {RA}_{i}^{Obs . S} \left(τ\right) - \left({RA}_{i}^{Est . S}\left(τ\right)-{RA}_{i}^{Est . C}\left(τ\right)\right)}{{RA}_{i}^{Obs . S} \left(τ\right) + {RA}_{i}^{Est . C} \left(τ\right)}$ and if a predetermined stopping criterion is not reached, replacing the dead-time probability function *pᵢ*(*τ*) by the new the dead-time probability function ${p}_{i}^{new} \left(τ\right)$ and returning to the step of applying the estimation method, and if the predetermined stopping criterion is reached, using ${p}_{i}^{new} \left(τ\right)$ as the dead-time probability function for the channel.

Preferably, the predetermined stopping criterion is ${max}_{τ} \left(abs\left({\sum }_{i = 1}^{Ch} {e}_{i} ⋅ {p}_{i}^{new} \left(τ\right)-{\sum }_{i = 1}^{Ch} {e}_{i} ⋅ {p}_{i} \left(τ\right)\right)\right) < {10}^{- 6}$ or ${max}_{τ , i} \left(abs\left({p}_{i}^{new}\left(τ\right)-{p}_{i}\left(τ\right)\right)\right) < {10}^{- 6}$

Preferably, generating at least a first corrected histogram $\left({m}_{0}^{new},{m}_{1}^{new},{m}_{2}^{new},{m}_{3}^{new},…\right)$ comprises, for each of an R+A distribution and an A distribution: generating a first histogram (*m*₀,*m*₁,*m*₂,*m*₃,...), the first histogram being a multiplicity histogram based on the detected pulse train ${C}_{i}^{t} ;$ generating a second histogram (*m̅*₀,*m̅*₁,*m̅*₂,*m̅*₃,...) containing the sum of estimated lost pulses with the dead-timed affected multiplicity *M-1*; generating a third histogram (*n*₀,*n*₁,*n*,*n*₃,...), the third histogram being a multiplicity histogram for lost triggers and/or gate time periods; and/or generating a fourth histogram (*n̅*₀,*n̅*₁,*n̅*₂,*n̅*₃,...) containing the average number of lost pulses in lost gate time periods with a certain dead-timed affected multiplicity *M-1.*

Preferably, the first corrected histogram ${\left({m}_{0}^{new},{m}_{1}^{new},{m}_{2}^{new},{m}_{3}^{new},…\right)}^{R + A}$ is generated using a first gate time period $\left[{t}_{0}+{t}_{1}^{R + A},{t}_{0}+{t}_{2}^{R + A}\right] ,$ where counting is triggered at time *t₀* and sums up all pulses received during the time period $\left[{t}_{0}+{t}_{1}^{R + A},{t}_{0}+{t}_{2}^{R + A}\right] ,$ where ${t}_{1}^{R + A}$ and ${t}_{2}^{R + A}$ are fixed offsets from *t₀* and ${t}_{1}^{R + A} < {t}_{2}^{R + A} ,$ and wherein:
(i) generating the first histogram (*m*₀,*m*₁,*m*₂,*m*₃,...) comprises triggering on the dead-time affected detected pulse train ${C}_{i}^{t} ,$ and counting the pulses ${C}_{i}^{t}$ in the first gate time period of the detected pulse train ${C}_{i}^{t}$ by calculating $M = {\sum }_{t = {t}_{0} + {t}_{1}}^{{t}_{0} + {t}_{2}} {\sum }_{i} {C}_{i}^{t}$ and increasing *mM* by ${\sum }_{i} {C}_{i}^{{t}_{0}} ;$
(ii) generating the second histogram (*m̅*₀,*m̅*₁,*m̅*₂,*m̅*₃,...) comprises triggering on the dead-time affected detected pulse train ${C}_{i}^{t} ,$ and counting the pulses in the first gate time period of the estimated lost pulse train ${l}_{i}^{t}$ by calculating $x = {\sum }_{i}^{{t}_{0} + {t}_{2}} {\sum }_{i} {C}_{i}^{t}$ and increasing *m̅_{M}* by $x ⋅ {\sum }_{i} {C}_{i}^{{t}_{0}} ;$
(iii) generating the third histogram multiplicity histogram (*n*₀,*n*₁,*n*,*n*₃,...) comprises triggering on the ELPT ${l}_{i}^{t} ,$ and counting the pulses ${C}_{i}^{t}$ in the first gate time period of the detected pulse train using $M = {\sum }_{t = {t}_{0} + {t}_{1}}^{{t}_{0} + {t}_{2}} {\sum }_{i} {C}_{i}^{t}$ from (i) and increasing *n_{M}* by the sum ${\sum }_{i} {l}_{i}^{{t}_{0}}$ of triggers on the ELPT ${l}_{i}^{t} ;$ and
(iv) generating the fourth histogram (*n̅*₀,*n̅*₁,*n̅*₂,*n̅*₃,...) comprises triggering on the estimated lost pulse train ${l}_{i}^{t} ,$ and counting the pulses ${l}_{i}^{t}$ in the first gate time period of the estimated lost pulse train ${l}_{i}^{t}$ using $M = {\sum }_{t = {t}_{0} + {t}_{1}}^{{t}_{0} + {t}_{2}} {\sum }_{i} {l}_{i}^{t}$ from (ii), weighting *x* with the sum ${\sum }_{i} {l}_{i}^{{t}_{0}}$ of estimated lost triggers, to calculate $x ⋅ {\sum }_{i} {l}_{i}^{{t}_{0}}$ and increasing *n̅_{M}* by $x ⋅ {\sum }_{i} {l}_{i}^{{t}_{0}}$

Preferably, generating the first corrected histogram ${\left({m}_{0}^{new},{m}_{1}^{new},{m}_{2}^{new},{m}_{3}^{new},…\right)}^{R + A}$ comprises: creating a new histogram ${\left({m}_{0}^{new},{m}_{1}^{new},{m}_{2}^{new},{m}_{3}^{new},…\right)}^{R + A}$ as the first corrected histogram and redistributing the entries of the first histogram (*m*₀,*m*₁,*m*₂,*m*₃,...)^{*R*+*A*} and the third histogram (*n*₀,*n*₁,*n*,*n*₃, ...)^{*R*+*A*} to it for all *i = 0, 1, 2, 3,* ... as follows: $\begin{matrix}{m}_{i + j}^{new} = {m}_{i + j}^{new} + {m}_{i} ⋅ {Pois}_{\left[{\overline{m}}_{i + 1}/{m}_{i + 1}\right]} \left(j\right) \\ for j = 0 , 1,2 , …\end{matrix}$ $\begin{matrix}{m}_{i + j}^{new} = {m}_{i + j}^{new} + {n}_{i} ⋅ {Pois}_{\left[{\overline{n}}_{i + 1}/{n}_{i + 1}\right]} \left(j\right) \\ for j = 0 , 1,2 , …\end{matrix}$ where *Pois*_{[*m̅_{M}*/*m_{M}*]} is the Poisson distribution with parameter *m̅_{M}*/*m_{M}.*

Preferably, the first corrected histogram ${\left({m}_{0}^{new},{m}_{1}^{new},{m}_{2}^{new},{m}_{3}^{new},…\right)}^{R + A}$ corresponds to a "R+A gate", and ${t}_{1}^{R + A}$ is small in the first gate time period $⌊ {t}_{0} + {t}_{1}^{R + A} , {t}_{0} + {t}_{2}^{R + A} ⌋ ,$ and the method further comprises: performing the steps described above to generate a second corrected histogram ${\left({m}_{0}^{new},{m}_{1}^{new},{m}_{2}^{new},{m}_{3}^{new},…\right)}^{A}$ in addition to the first corrected histogram ${\left({m}_{0}^{new},{m}_{1}^{new},{m}_{2}^{new},{m}_{3}^{new},…\right)}^{R + A} ,$ wherein the second corrected histogram ${\left({m}_{0}^{new},{m}_{1}^{new},{m}_{2}^{new},{m}_{3}^{new},…\right)}^{A}$ corresponds to a "A gate"; wherein the second corrected histogram ${\left({m}_{0}^{new},{m}_{1}^{new},{m}_{2}^{new},{m}_{3}^{new},…\right)}^{A}$ is generated using a second gate time period $⌊ {t}_{0} + {t}_{1}^{A} , {t}_{0} + {t}_{2}^{A} ⌋ ;$ and wherein ${t}_{2}^{A}$ is large in the second gate time period $⌊ {t}_{0} + {t}_{1}^{A} , {t}_{0} + {t}_{2}^{A} ⌋ .$

Preferably, the method is configured for neutron multiplicity counting, whereby each detected pulse train is generated by a respective part of the detector, each pulse in the multi-channel pulse train corresponding to at least one detected neutron. However, the techniques described herein, especially the embodiments described above can also be used for other devices with similar characteristics.

Obtaining a relative efficiency may comprise retrieving a stored relative efficiency value from memory. Alternatively, obtaining a relative efficiency may comprise retrieving such values input by a user via a user interface. Alternatively, obtaining a relative efficiency may comprise determining the relative efficiency value by mathematical operation.

According to another aspect of the invention, as defined in independent claim 13, there is provided a pulse counting system for pulse multiplicity counting with dead time correction, comprising: a source of pulses providing on each of a plurality of channels a respective detected pulse train; and processing circuitry, coupled for receiving the detected pulse trains, the processing circuitry being operable to perform the method as described above.

According to another aspect of the invention, as defined in independent claim 14, there is provided a recordable, rewritable or storable medium having recorded or stored thereon data defining or transformable into instructions for execution by processing circuitry of the pulse counting system of claim 13 and corresponding to at least the steps of the method as described above.

According to another aspect of the invention, as defined in independent claim 15, there is provided a server computer incorporating a communications device and a memory device and being adapted for transmission on demand or otherwise of data defining or transformable into instructions for execution by processing circuitry of the pulse counting system of claim 13 and corresponding to at least the steps as described above.

Using this new, corrected multiplicity histogram for further calculation instead of the old histogram (*m*₀,*m*₁,*m*₂,*m*₃,...) leads to improved results.

After applying the correction described here for both the "R+A gate" and the "A gate" and using the corrected histograms for subsequent calculations, one arrives at improved values for the "singles", doubles", "triples" and higher order "moments", which are then used to characterize a fissile material.

### Brief Description of the Drawings

Further details and advantages of the present invention will be apparent from the following detailed description of several not limiting embodiments with reference to the attached drawings, wherein:
**Fig. 1** shows the process for multiplicity measurement, according to an embodiment of the invention;
**Fig. 2** illustrates an observed/detected pulse train (upper) and estimated lost pulse train (ELPT) (lower) that could be obtained using techniques in accordance with an embodiment of the invention;
**Fig. 3** shows a Rossi Alpha distribution of a simulated pulse train with lost pulses due to (simulated) dead-time, obtained using techniques in accordance with an embodiment of the invention;
**Fig. 4** shows a Rossi Alpha distributions obtained using techniques in accordance with an embodiment of the invention, including parts for (i) observed pulses on the same channel as the trigger *RA^{Obs.S}*(*τ*) and (ii) on channels other than the trigger *RA^{Obs.O}*(*τ*), (iii) estimated pulses on the same channel as the trigger *RA^{Est.S}*(*τ*) and (iv) estimated pulses on channels other than the trigger *RA^{Est.O}*(*τ*);
**Fig. 5** shows a Rossi Alpha distributions obtained using techniques in accordance with an embodiment of the invention, including parts for estimated lost pulses linked to a trigger pulse which likely caused its loss *RA^{Est.C}*(*τ*), and estimated lost pulses on the same channel as the trigger *RA^{Est.S}*(*τ*); and
**Fig. 6** shows the calibration procedure used in step s104 of Fig. 1;
**Fig. 7** illustrates multiplicity counting using techniques in accordance with an embodiment of the invention, showing the original dead-timed pulse train ${C}_{i}^{t}$ and the pulse train ${l}_{i}^{t}$ of estimated lost pulses;
**Figs. 8A** and **8B** show the procedure for calculating a corrected multiplicity distribution in steps s110 and s112 of Fig. 1; and
**Fig. 9** (PRIOR ART) shows a known technique for multiplicity counting.

### Description of Preferred Embodiments

The present disclosure is directed providing dead-time correction for a particle detector, such as, a neutron detector, having at least two channels and which is configured for detecting the presence of particles in each of the channels. Although the present disclosure describes applying a dead-time correction method to neutron detectors, the dead-time correction method is not limited thereto and can be applied to other multi-channel particle detectors in which different events are detected on different channels. The term "events" as used herein refers to emission of a particle within the particle detector.

In an example of a particle detector, a neutron detector having at least two channels, and preferably more than two channels, is configured for receiving a sample for measurement. The detector determines the number of emitted particles as a number of detection events in each channel. As described above, detection of an emitted particle in one channel leads to a dead-time during which no other emitted particles can be detected in that channel. The detection events are processed in a processor or processing circuitry associated with the detector to provide pulse trains for each channel from which lost pulses in each channel can be derived. The dead-time behaviour of each channel in the neutron detector is determined iteratively, and from the derivation of the lost pulses in each channel, correction values are generated which account for the multiplicity histogram of the neutron measurements using the detector.

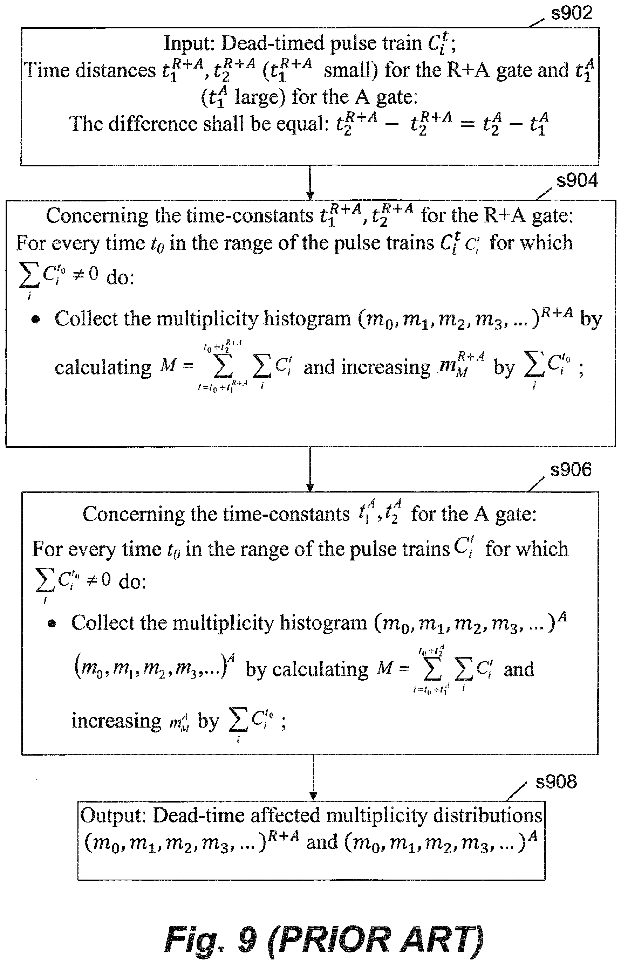

Referring initially to **Fig. 9** (PRIOR ART), this shows a known technique for multiplicity counting. Briefly, starting (step s902) with dead-timed pulse train ${C}_{i}^{t}$ as input, for the R+A gate, the multiplicity histogram (*m*₀,*m*₁,*m*₂,*m*₃,...)^{*R*+*A*} is collected by calculating in s904: $M = {\sum }_{t = {t}_{0} + {{t}_{1}}^{R + A}}^{{t}_{0} + {{t}_{2}}^{R + A}} {\sum }_{i} {C}_{i}^{t}$

In addition, for the A gate, the multiplicity histogram (*m*₀,*m*₁,*m*₂,*m*₃,...)*^{A}* is collected by calculating in step s906: $M = {\sum }_{t = {t}_{0} + {{t}_{1}}^{A}}^{{t}_{0} + {{t}_{2}}^{A}} {\sum }_{i} {C}_{i}^{t}$

What is output (step s908) is the dead-time affected multiplicity distributions (*m*₀,*m*₁,*m*₂,*m*₃,...)^{*R*+*A*} and (*m*₀,*m*₁,*m*₂,*m*₃,...)*^{A}*. The resulting multiplicity distributions (*m*₀,*m*₁,*m*₂,*m*₃,...)^{*R*+*A*} and (*m*₀,*m*₁,*m*₂,*m*₃,...)*^{A}* are used for subsequent calculations, which lead to the desired information. However, these multiplicity distributions are affected by dead-time losses, so their usefulness is limited.

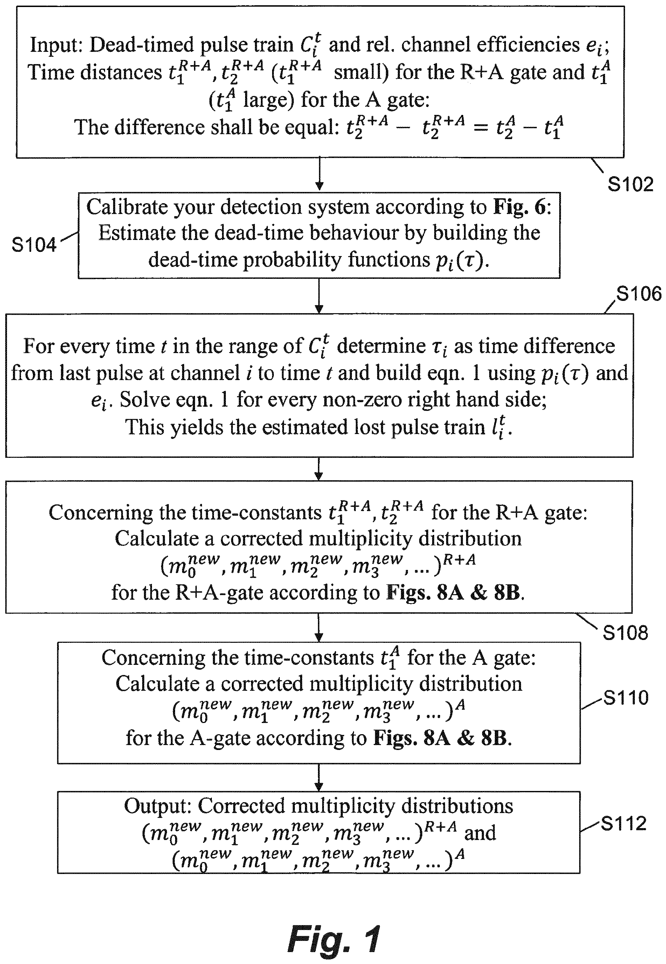

Referring now to **Fig. 1****,** this shows the process for multiplicity measurement, according to an embodiment of the invention, and incorporating the aforementioned three parts.

It should be noted that the invention described herein can be applied to neutron counting in general, irrespective of the physical principle used to detect the neutrons and convert the detection events into a pulse train. Furthermore it should be noted that the invention is described subsequently from a neutron counting perspective, but is also applicable to any kind of instrument or device with similar characteristics.

It is further noted that, to the extent that Rossi-Alpha distributions are used in accordance with embodiments of the invention, the dead-time correction techniques described herein make no use of the abovementioned exponential die-away behaviour. Therefore, the embodiments of the invention described here are applicable for a wider range of devices than thermal neutron detectors: they are also applicable to similar instruments with non-exponential characteristics in their Rossi-Alpha distribution time-behaviour.

Improved dead-time correction algorithms are needed because currently used corrections require knowledge of dead-time parameters which are often not accurately known. Dead-time corrections can significantly influence results. Such high count-rates - exceeding 128 pulses within a gate - pose new challenges to dead-time correction methods.

According to embodiments, an alternative method for dead time correction was developed, relying on analysing data from a multichannel list mode counter. Such multi-channel list mode counters are available from, e.g., LANL with 32 channels and a time resolution of 100 ηs or from the Hungarian academy of science (PTR32) also using 32 channels and a time resolution of 10 ηs.

According to embodiments, a method of correcting dead-time loss using such multi-channel list-mode counters comprises three parts, as follows.

The first part is a method of estimating lost pulses, by comparing the arrival of pulses on different channels to each other, assumed that the dead-time behaviour of these channels is known.

The second part consists of determining the dead-time behaviour of those channels using some basic properties concerning relative efficiencies of channels. This is an iterative process involving the estimation method developed in the first part.

Finally, in a third part the lost pulses are estimated for the pulse train using the method from the first part and the dead-time behaviour determined in the second part. This results in an additional, parallel pulse train for estimated lost pulses. While the multiplicity measurement is carried out, such estimated lost pulses are then added and re-assigned to the correct gates using probabilistic methods.

### Estimation of lost pulses

According to an embodiment, the method of estimating lost pulses uses the time-information of incoming pulses on different channels. The process is the following:
Wait until a pulse had been recorded on one channel; for illustration, this is called channel "A". Then this channel A must be dead for a while and no or fewer pulses than expected should be recorded on it during that - initially undefined - dead-time period.

The algorithm then measures the count-rate at other channels and compares it to the count-rate of channel A (currently on dead-time).

By performing this with many cases (different gates/time period and channels) the algorithm estimates how many pulses have on average been lost during the dead-time on channel A, after a (trigger) pulse had been registered there.

This addresses the issue that higher count-rates require a more sophisticated method of estimating the lost counts due to dead-time than are described, for example, in EP-B-2478391. The reason for this is that in such case second order effects also need to be taken into account: once another pulse had been registered on a channel other than A, that channel is on dead-time as well. This must be taken into account during this estimation, which leads in fact to channels being interconnected during the calculation of the estimation. A suitable calculation method based on matrix calculation had been found to resolve that problem, which is described subsequently.

In the following it is assumed that time is passing in small, discrete time-steps. Typical values for the steps are 10 ηs, 50 ηs or 100 ηs. The time measure for the whole pulse train is denoted as *t* (or *t₁, t₂,* ... as appropriate), running basically on an infinite scale.

In contrast to this, the time-distance from some preceding pulse, (e.g. the time from a preceding pulse on a channel or the time from the trigger in a Rossi-Alpha distribution) is denoted as *τ*, in order not to confuse it with the time *t* on the overall pulse train. In case the time difference refers to a specific time difference on channel *i* and possibly to a specific, leading/triggering pulse on that channel, it is indexed with the channel number *i.*

In the techniques disclosed herein, the following notation is used:
${C}_{i}^{t}$ denotes whether there was a pulse observed/detected at channel *i* and time *t*; ${C}_{i}^{t} = 1$ if there was a pulse observed at time *t* at channel *i*, ${C}_{i}^{t} = 0$ else.
*Ch* denotes the maximum number of channels available.
${L}_{i}^{t}$ denotes whether there was a pulse lost at channel *i* and time *t*: ${L}_{i}^{t} = 1$ if there was a pulse lost at time *t* at channel *i,* ${L}_{i}^{t} = 0$ else.
${l}_{i}^{t}$ denotes the calculated (or estimated) average lost pulses at channel *i* and time *t.* It is the result of solving eqn.1 given below and its value may be anything larger or equal to 0, with 0 indicating that there was no lost pulse estimated at this time and channel. Ideally, averaged over time its values should correspond to ${L}_{i}^{t} : {\sum }_{t} {L}_{i}^{t} \approx {\sum }_{t} {l}_{i}^{t}$
*eᵢ* denotes the relative efficiency of channel *i* with respect to the sum of all channels and the non dead-time affected pulse train, which means ${\sum }_{i} {e}_{i} = 1$ since *eᵢ* are the relative efficiencies of the respective channels, it holds obviously eqn. 2 given below. (The symbol ≈ means equality in statistical average.)
*τᵢ* denotes the time which elapsed from the last preceding pulse on channel *i.* To be precise, *τᵢ* = *t* - *t*₁ if the last preceding pulse on channel *i* was at time *t₁.* In eqn.1, *τᵢ* differs from channel to channel since preceding pulses on different channels occur on different times. Therefore it is indexed with the channel number *i.*
*pᵢ*(*τ*) denotes the probability of a pulse loss due to dead-time on channel *i* depending on the time *τ* which elapsed from the last preceding pulse on that channel. *pᵢ*(*τ*) changes its value with the time *τ* elapsed from the last count observed on that channel, since the probability of dead-time loss depends mainly on this time. The values of this function *pᵢ* are within the range [0,1]: 1 means that a loss due to dead-time had definitely occurred if there were a pulse at that time on channel *i*, 0 means that no such loss would occur at all. These functions *pᵢ* differ from channel to channel, depending on the type of electronics and other parameters.

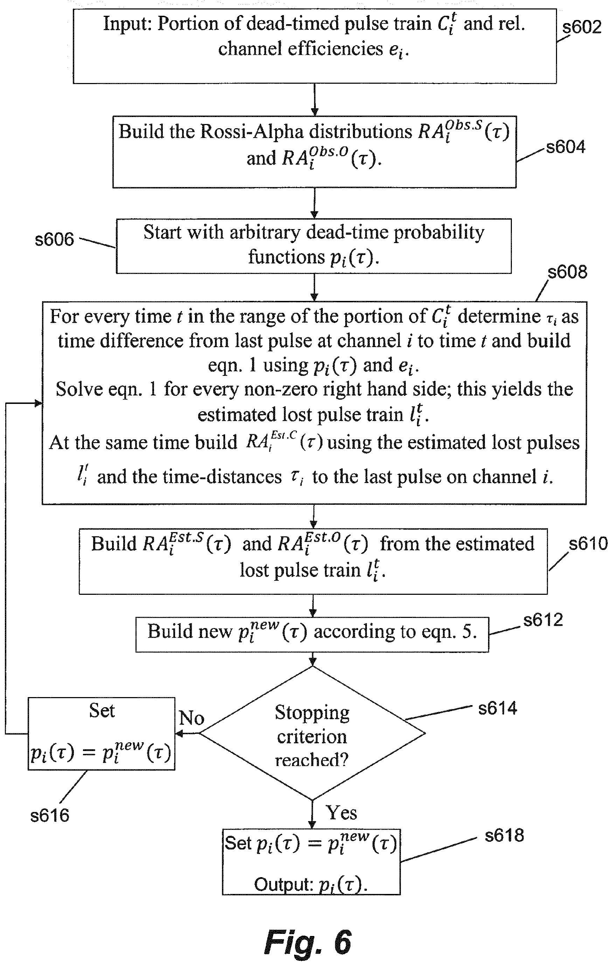

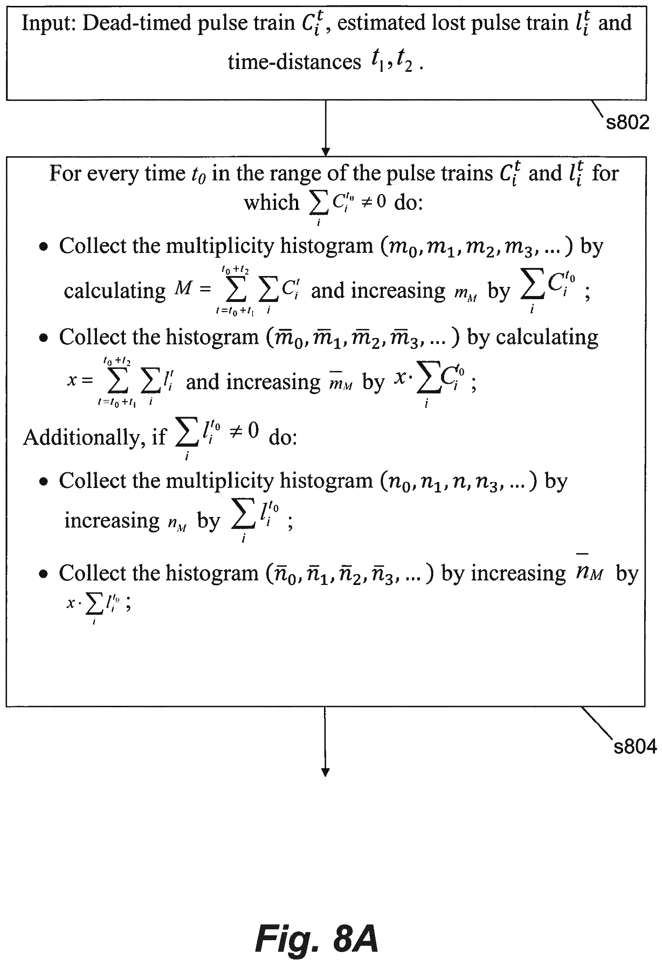

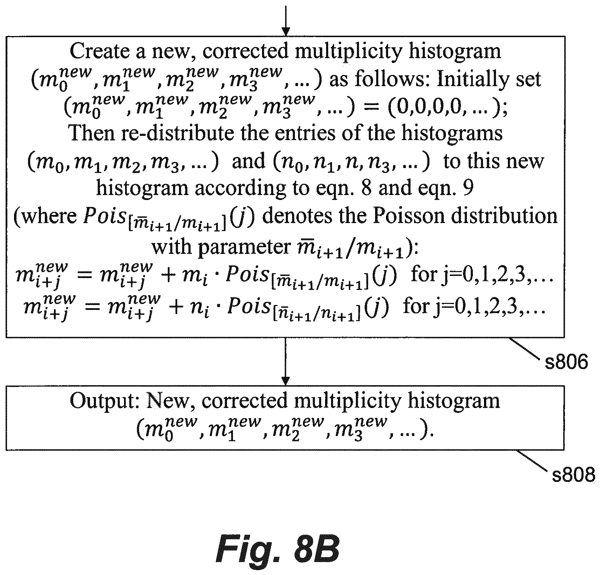

Returning to **Fig. 1****,** an embodiment of the process for multiplicity counting is there illustrated. In this embodiment, the relative efficiencies *eᵢ* of the individual channels act only as additional input parameters, which are however easy to obtain. The procedure comprises receiving (step s102) a dead-timed pulse train ${C}_{i}^{t}$ and relative channel efficiencies *eᵢ.* In this embodiment, the process consists of three parts:
1) Eqn. 1 (given below) is repetitively established and solved (step s106) for all *t* in the range of the dead-timed pulse train ${C}_{i}^{t} ,$ if the right hand side of eqn. 1 is non-zero. These solutions leads to an estimated pulse lost pulse train ${l}_{i}^{t}$ (ELPT). This eqn. 1 and its repetitive solutions are used in the new measurement procedure outlined in **Fig. 1****,** but also in the calibration procedure outlined in **Fig. 6** (which itself is again part of the new measurement procedure from **Fig. 1**).
2) The calibration procedure, as outlined in **Fig. 6****:** this calibrates (step s104) the dead-time behaviour functions *pᵢ*(*τ*) and it comprises eqn. 1 and its repetitive solutions from part 1). The calibration procedure makes use of some basic properties of the Rossi-Alpha distribution from the non-dead-timed pulse train ${C}_{i}^{t} + {L}_{i}^{t} ,$ which shall also hold for the Rossi-Alpha distribution from the dead-timed pulse train ${C}_{i}^{t}$ plus the estimated lost pulse train ${l}_{i}^{t} .$
3) The building (steps s108, s110) of a corrected multiplicity histogram as outlined in **Figs. 8A** and **8B****:** This part re-shuffles a dead-time affected multiplicity distribution (*m*₀,*m*₁,*m*₂,*m*₃,...) and re-distributes its entries according to lost pulses from the estimated lost pulse train ${l}_{i}^{t}$ in order to obtain a corrected multiplicity distribution $\left({m}_{0}^{new},{m}_{1}^{new},{m}_{2}^{new},{m}_{3}^{new},…\right) .$ This part (3) should be seen independent and supplementary to the previous two parts: there is also other information which could be obtained with increased precision from the pulse trains ${C}_{i}^{t}$ and ${l}_{i}^{t}$ than it could from the dead-timed pulse train ${C}_{i}^{t}$ alone.

These parts 1) to 3) described above are used to obtain, from respective time-distance constants ${t}_{1}^{R + A} ,$ ${t}_{2}^{R + A}$ ( ${t}_{1}^{R + A}$ small) for the R+A gate and ${t}_{1}^{A} ,$ ${t}_{2}^{A}$ ( ${t}_{1}^{A}$ large) for the A gate, improved multiplicity distributions ${\left({m}_{0}^{new},{m}_{1}^{new},{m}_{2}^{new},{m}_{3}^{new},…\right)}^{R + A}$ and ${\left({m}_{0}^{new},{m}_{1}^{new},{m}_{2}^{new},{m}_{3}^{new},…\right)}^{A} .$ These, used for subsequent calculations, lead to improved results.

It should again be noted that the procedures from parts 1) and 2) are independent from the measurement procedure to obtain multiplicity distributions like $\left({m}_{0}^{new},{m}_{1}^{new},{m}_{2}^{new},{m}_{3}^{new},…\right)$ as described in part 3) and that the estimated lost pulse train ${l}_{i}^{t}$ obtained by parts 1) and 2) can be used as well to obtain other, corrected information about the original, but unknown pulse train ${C}_{i}^{t} + {L}_{i}^{t} .$

The output of the process of Fig. 1 are corrected multiplicity distributions ${\left({m}_{0}^{new},{m}_{1}^{new},{m}_{2}^{new},{m}_{3}^{new},…\right)}^{R + A}$ and ${\left({m}_{0}^{new},{m}_{1}^{new},{m}_{2}^{new},{m}_{3}^{new},…\right)}^{A}$ (step s112).

The steps of the process of **Fig. 1** will be discussed in more detail hereinafter.

The average pulse loss is calculated by solving the following matrix eqn. 1 for the unknowns ${l}_{i}^{t} ,$ provided the probabilities for pulse loss *pᵢ*(*τ*) are known: $\left(\begin{matrix}1 & - \frac{{p}_{1} \left({τ}_{1}\right) {e}_{1}}{1 - {e}_{1}} & … & - \frac{{p}_{1} \left({τ}_{1}\right) {e}_{1}}{1 - {e}_{1}} \\ - \frac{{p}_{2} \left({τ}_{2}\right) {e}_{2}}{1 - {e}_{2}} & 1 & & ⋮ \\ ⋮ & ⋮ & ⋱ & \\ - \frac{{p}_{Ch} \left({τ}_{Ch}\right) {e}_{Ch}}{1 - {e}_{Ch}} & - \frac{{p}_{Ch} \left({τ}_{Ch}\right) {e}_{Ch}}{1 - {e}_{Ch}} & … & 1\end{matrix}\right) \left(\begin{matrix}{l}_{1}^{t} \\ {l}_{2}^{t} \\ ⋮ \\ {l}_{Ch}^{t}\end{matrix}\right) = \left(\begin{matrix}\frac{{p}_{1} \left({τ}_{1}\right) {e}_{1}}{1 - {e}_{1}} {\sum }_{i \neq 1} {C}_{i}^{t} \\ \frac{{p}_{2} \left({τ}_{2}\right) {e}_{2}}{1 - {e}_{2}} {\sum }_{i \neq 2} {C}_{i}^{t} \\ ⋮ \\ \frac{{p}_{Ch} \left({τ}_{Ch}\right) {e}_{Ch}}{1 - {e}_{Ch}} {\sum }_{i \neq Ch} {C}_{i}^{t}\end{matrix}\right)$ eqn. 1

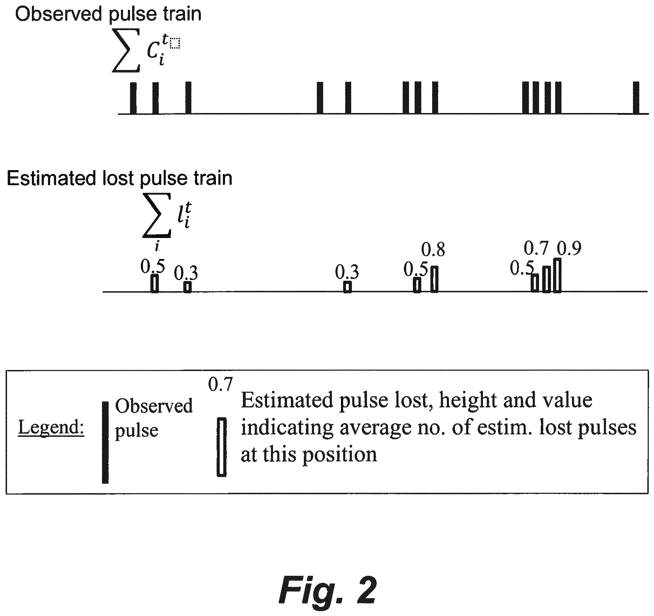

By solving eqn. 1 for each time-step *t* with meaningful (i.e. non-zero) right hand side, another pulse train for calculated/estimated, lost pulses can be established in parallel to the existing one. This is called the "Estimated lost pulse train" (ELPT), see **Fig. 2****.**

**Fig. 2** shows an observed/detected pulse train (upper) and estimated lost pulse train (ELPT) (lower) obtained using techniques in accordance with an embodiment of the invention. The numbers over the estimated lost pulses indicate the estimated pulse loss at that position. Both the observed and the estimated pulse train shown here are already summed up over all available channels.

### Determining the dead-time behaviour - calibrating the system

An issue is that the dead-time behaviour *pᵢ*(*τ*) of a channel after it had received a pulse is in general not known in advance. This must be estimated as well, meaning that the system must be calibrated. This can be done using the measurement data itself by taking advantage of the following observation: provided a non-dead-timed pulse train, the fraction of pulses received on one channel corresponds statistically to the relative efficiency *eᵢ* of that channel with respect to all channels: ${\sum }_{t} \left({C}_{i}^{t}+{L}_{i}^{t}\right) \approx {e}_{i} {\sum }_{i} {\sum }_{t} \left({C}_{i}^{t}+{L}_{i}^{t}\right)$ eqn. 2

Eqn. 2 can be reformulated as ${\sum }_{t} \left({C}_{i}^{t}+{L}_{i}^{t}\right) \approx \frac{{e}_{i}}{1 - {e}_{i}} {\sum }_{j \neq i} {\sum }_{t} \left({C}_{j}^{t}+{L}_{j}^{t}\right)$ eqn. 3

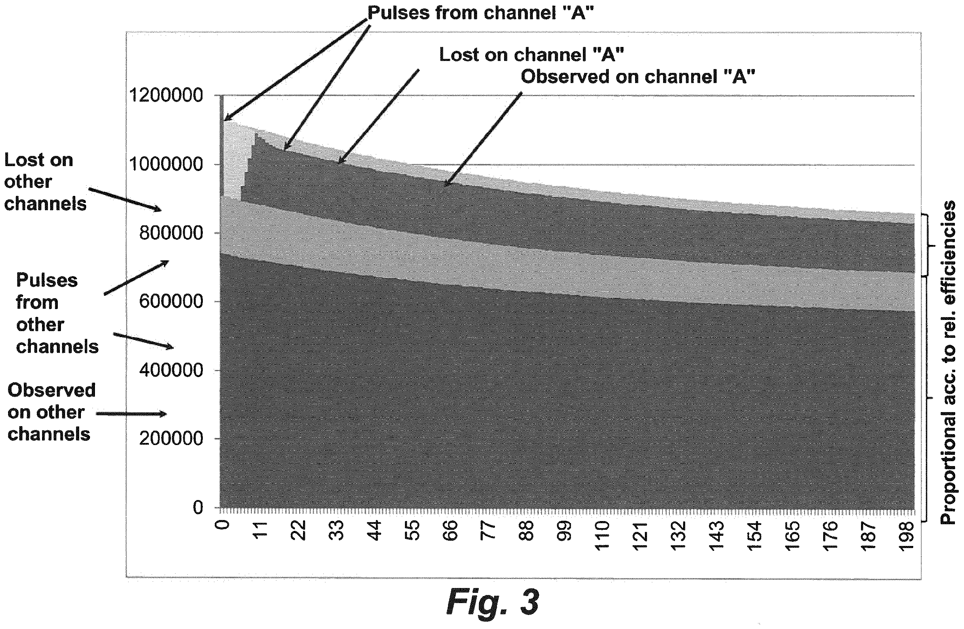

This property of a non-dead-timed pulse train holds - on average - also during the whole Rossi-Alpha distribution of a pulse train. This equilibrium is however disturbed by effects like dead-time taking place only on that channel which recently received a pulse ("channel A"): if the Rossi-Alpha distribution is discriminated between pulses on channel A and on other ones, this effect can clearly be seen (see **Fig. 3****).**

**Fig. 3** shows a Rossi Alpha distribution of a simulated pulse train with lost pulses due to dead-time, obtained using techniques in accordance with an embodiment of the invention.

If the calculation of the estimated lost pulses corresponds statistically to the truly lost pulses, so to say ${\sum }_{t} {L}_{i}^{t} \approx {\sum }_{t} {l}_{i}^{t}$ the lost pulses ${L}_{i}^{t}$ can be replaced with the estimated lost ones ${l}_{i}^{t}$ in eqn. 3: ${\sum }_{t} \left({C}_{i}^{t}+{l}_{i}^{t}\right) \approx \frac{{e}_{i}}{1 - {e}_{i}} {\sum }_{j \neq i} {\sum }_{t} \left({C}_{j}^{t}+{l}_{j}^{t}\right)$ eqn. 4

So an iterative process is used for gradually adapting the timely shape of the dead-time probability functions *pᵢ*(*τ*) until this equilibrium according to eqn. 4 is reached: as a second pulse train of estimated lost pulses is available from repeatedly solving eqn. 1, a Rossi-Alpha distribution for the estimated, non-dead-timed pulse train can be established, containing both and at the same time discriminating between estimated lost pulses and observed ones. Discriminating at the same time between "Channel A" and all other channels leads to a picture similar to **Fig. 3****.** Using this it can be easily checked whether the proportional equilibrium according to the relative efficiencies of channels from eqn. 4 is reached.

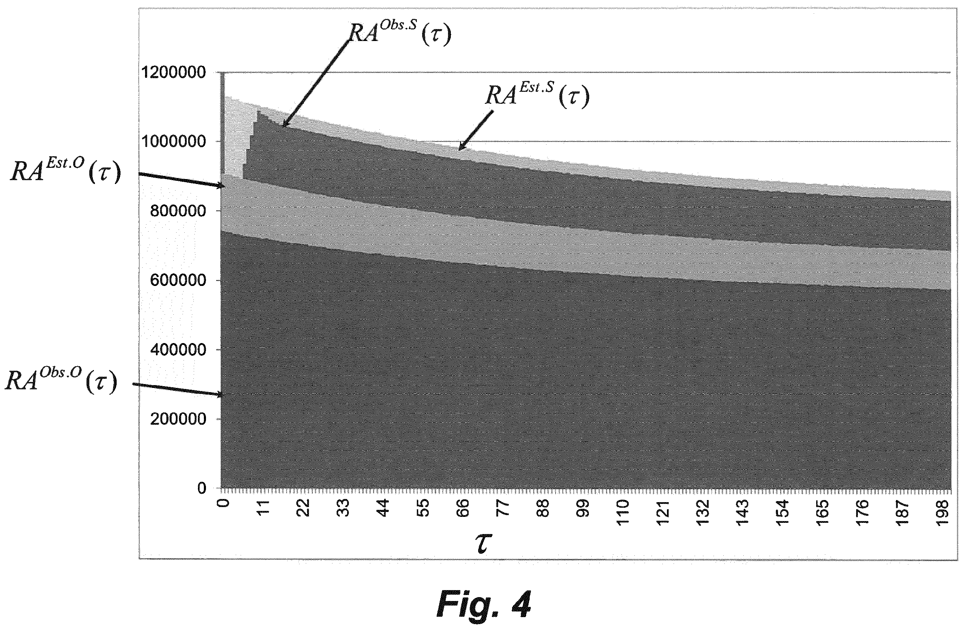

According to an embodiment, the algorithm for gradually adapting the dead-time probability functions *pᵢ*(*τ*) is as follows:
1) Use some part of the pulse train and build for each channel *i* the following Rossi-Alpha distributions, while discriminating between pulses on the same channel as the trigger pulse and those on other channels.
   a. ${RA}_{i}^{Obs . S} \left(τ\right)$ denotes the Rossi-Alpha distribution of observed pulses where the trigger occurred on channel *i* and pulses only from channel *i* are recorded.
   b. Vice versa, ${RA}_{i}^{Obs . O} \left(τ\right)$ denotes the Rossi-Alpha distribution of observed pulses elsewhere than on channel *i*, while the trigger occurred on channel *i.* ${RA}_{i}^{Obs . S} \left(τ\right)$ and ${RA}_{i}^{Obs . O} \left(τ\right)$ together yield the usual Rossi-Alpha distribution for triggers occurring on channel *i*, see **Fig. 4****.**

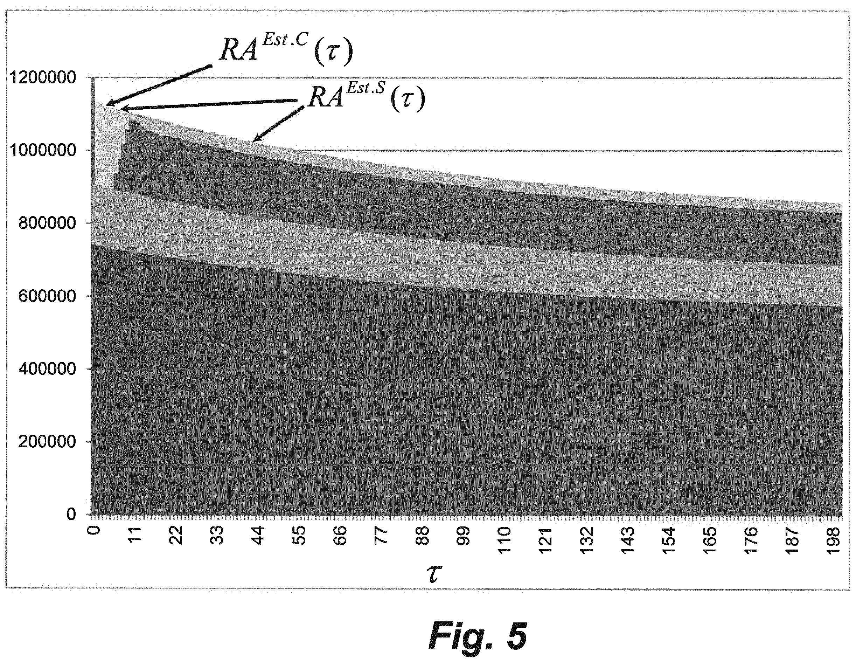

   **Fig.** 4 shows a Rossi Alpha distributions obtained using techniques in accordance with an embodiment of the invention, including parts for (i) observed pulses on the same channel as the trigger *RA^{Obs.S}*(*τ*) and (ii) on channels other than the trigger *RA^{Obs.O}*(*τ*), (iii) estimated pulses on the same channel as the trigger *RA^{Est.S}*(*τ*) and (iv) estimated pulses on channels other than the trigger *RA^{Est.O}*(*τ*). Here the sum over all channels is shown.
2) Start with some initial guess of dead-time probability functions *pᵢ*(*τ*) e.g. with no dead-time at all: *pᵢ*(*τ*) = 0;
3) On the selected part of the pulse train, apply the estimation method for lost pulses described above by solving eqn. 1 for each time *t* with meaningful (i.e. non-zero) right hand side of eqn. 1. In this way, calculate an estimated lost pulse train (ELPT) for this part of the pulse train, see **Fig. 2****.**
   a. While doing so, take for each channel *i* with ${l}_{i}^{t} > 0$ the time-distance *τᵢ* to the last pulse on channel *i* before ${l}_{i}^{t} .$ Using this time distance (and only this one) build up a Rossi-Alpha distribution of estimated lost pulses on channel *i*. This loss such estimated by ${l}_{i}^{t}$ is assumed to be caused by the respective leading pulse. These Rossi-Alpha distributions are denoted as ${RA}_{i}^{Est . C} \left(τ\right) ,$ see **Fig. 5****.**

   **Fig. 5** shows a Rossi Alpha distributions obtained using techniques in accordance with an embodiment of the invention, including parts for estimated lost pulses linked to a trigger pulse which likely caused its loss *RA^{Est.C}*(*τ*), and estimated lost pulses on the same channel as the trigger *RA^{Est.S}*(*τ*). Here the sum over all channels is shown.
4) Use the ELPT from the previous step to build further Rossi-Alpha distributions: trigger on the pulses from the original, dead-timed pulse train but build Rossi-Alpha distributions for each channel *i* using the estimated lost pulses from ELPT: again discriminate between estimated lost pulses on the channel *i* and those on other channels. The latter will lead to a Rossi-Alpha distribution for estimated lost pulses on other channels ${RA}_{i}^{Est . O} \left(τ\right) ,$ see **Fig. 4****.** The former constitutes a Rossi-Alpha distribution of estimated lost pulses exclusively on channel *i* ${RA}_{i}^{Est . S} \left(τ\right) ,$ see **Fig. 4****.** It contains ${RA}_{i}^{Est . C} \left(τ\right)$ as well as other lost pulses on channel *i,* not caused by the trigger, but by another pulse on channel *i,* see **Fig. 5****.**
5) Calculate new dead-time probability functions ${p}_{i}^{new} \left(τ\right)$ according to eqn. 5. ${p}_{i}^{new} \left(τ\right) = \frac{\frac{{e}_{i}}{1 - {e}_{i}} \left({RA}_{i}^{Obs . O}\left(τ\right)+{RA}_{i}^{Est . O}\left(τ\right)\right) - {RA}_{i}^{Obs . S} \left(τ\right) - \left({RA}_{i}^{Est . S}\left(τ\right)+{RA}_{i}^{Est . C}\left(τ\right)\right)}{{RA}_{i}^{Obs . S} \left(τ\right) + {RA}_{i}^{Est . C} \left(τ\right)}$ eqn. 5
6) If the stopping criterion is not reached, replace *pᵢ*(*τ*) by ${p}_{i}^{new} \left(τ\right)$ and go to step 3). Else use ${p}_{i}^{new} \left(τ\right)$ as dead-time probability functions for the respective channels.

**Stopping criterion:** there are various stopping criteria possible for the calibration algorithm described above. In one embodiment, the differences between the new and the last calculated dead-time probability, as a weighted (by channel efficiencies) sum over all channels, is limited: ${max}_{τ} \left(abs\left({\sum }_{i = 1}^{Ch} {e}_{i} ⋅ {p}_{i}^{new} \left(τ\right)-{\sum }_{i = 1}^{Ch} {e}_{i} ⋅ {p}_{i} \left(τ\right)\right)\right) < {10}^{- 6}$ eqn. 6

It means that the iteration stops when there is not much change in the calculated dead-time probabilities between two consecutive iterations. However, in another embodiment, the criterion is the following: ${max}_{τ , i} \left(abs\left({p}_{i}^{new}\left(τ\right)-{p}_{i}\left(τ\right)\right)\right) < {10}^{- 6}$ eqn. 7

In an alternative embodiment, one could stop if the proportionality according to eqn. 4 over an early part of the Rossi-alpha distribution (shown in **Fig. 3****)** between "channel A" and the rest of the channels has been reached within a predetermined limit.

**Fig. 6** shows the calibration procedure used in step s104 of **Fig. 1****.** Here, the dead-time behaviour *pᵢ*(*τ*) is estimated from a portion of the pulse train ${C}_{i}^{t} .$ And here, of course *i* runs over all channels *i* = *1*, ..., *Ch* and *t* runs over the time representing the portion of the pulse train. The procedure commences with receiving (step s602) inputs to the process - a portion of dead-timed pulse train ${C}_{i}^{t}$ and relative channel efficiencies *eᵢ.*

Next (step s604), the Rossi-Alpha distributions ${RA}_{i}^{Obs . S} \left(τ\right)$ and ${RA}_{i}^{Obs . O} \left(τ\right)$ are built. For the subsequent processing, it starts (step s606) with arbitrary dead-time probability functions *pᵢ*(*τ*).

In the subsequent step (step s608), the following operations are performed: (i) for every time *t* in the range of the portion of ${C}_{i}^{t}$ determine *τᵢ* as time difference from last pulse at channel *i* to time *t* and build eqn. 1 using *pᵢ*(*τ*) and *eᵢ*; (ii) solve eqn. 1 for every non-zero right hand side; this yields the estimated lost pulse train ${l}_{i}^{t} ;$ and (iii) at the same time build ${RA}_{i}^{Est . C} \left(τ\right)$ using the estimated lost pulses ${l}_{i}^{t}$ and the time-distances *τᵢ* to the last pulse on channel *i.*

Next (step s610), ${RA}_{i}^{Est . S} \left(τ\right)$ and ${RA}_{i}^{Est . O} \left(τ\right)$ are built from the estimated lost pulse train ${l}_{i}^{t} .$ Then, new ${p}_{i}^{new} \left(τ\right)$ is built according to eqn. 5 (step s612).

At step s614, a check is made as to whether a stopping criterion has been reached. If not, then an operation (step s616) is performed to set ${p}_{i} \left(τ\right) = {p}_{i}^{new} \left(τ\right)$ and return to step s608.

If, however, at step s614, is found that the stopping criterion has been reached, an operation (step s618) is performed to set ${p}_{i} \left(τ\right) = {p}_{i}^{new} \left(τ\right)$ and to output *pᵢ*(*τ*).

### Correcting the multiplicity histogram

During multiplicity counting, one collects a multiplicity histogram (*m*₀,*m*₁,*m*₂,*m*₃,...): each *mᵢ* contains how often there had been *i* pulses counted within a time-window triggered by a pulse ${C}_{i}^{t} .$

One triggers at time *t₀* and sums up all pulses received during the (gate) time period └*t*₀ + *t*₁, *t*₀ + *t*₂┘, with some fixed offsets *t₁* and *t₂* from *t₀* (and, of course, *t₁* < *t₂*). This means that for a given *t₀,* one calculates $M = {\sum }_{t = {t}_{0} + {t}_{1}}^{{t}_{0} + {t}_{2}} {\sum }_{i} {C}_{i}^{t}$ and increases *m_{M}* by the number of triggers ${\sum }_{i} {C}_{i}^{{t}_{0}}$ within the histogram (*m*₀,*m*₁,*m*₂,*m*₃,...). This, of course, makes sense only if there are triggers present at time *t₀,* i.e. if ${\sum }_{i} {C}_{i}^{{t}_{0}} > 0$ In the end, the numbers *m*₀,*m*₁,*m*₂,*m*₃,..., etc. indicate how often there had been 0, 1, 2, 3,... etc. pulses accounted for within such a gate triggered by a pulse.

The multiplicity histogram is affected by pulse loss due to dead-time in two ways.

First, if a pulse is lost it cannot trigger a gate and therefore the gate (and with it the entry in the histogram (*m*₀,*m*₁,*m*₂,*m*₃,...)) is lost.

Secondly, the number of pulses $M = {\sum }_{t = {t}_{0} + {t}_{1}}^{{t}_{0} + {t}_{2}} {\sum }_{i} {C}_{i}^{t}$ is calculated incorrectly due to missing pulses within the gate period [*t*₀ + *t*₁, *t*₀ + *t*₂], so the wrong *m_{M}* may be increased in the histogram.

The ultimate goal is to correct for these losses caused by the missing pulses ${L}_{i}^{t} :$ the missing pulses ${L}_{i}^{t}$ are estimated by calculating ${l}_{i}^{t}$ using eqn. 1 and estimating the dead-time behaviour *pᵢ*(*τ*) obtained by the calibration described hereinabove. This yields a second pulse train ${\left({l}_{1}^{t},…,{l}_{Ch}^{t}\right)}_{t} ,$ containing estimated lost pulses. Then, multiplicity counting is applied involving both pulse trains ${\left({C}_{1}^{t},…,{C}_{Ch}^{t}\right)}_{t}$ and ${\left({l}_{1}^{t},…,{l}_{Ch}^{t}\right)}_{t}$ in the following way, resulting in four histograms (*m*₀,*m*₁,*m*₂,*m*₃,...), (*m̅*₀,*m̅*₁,*m̅*₂,*m̅*₃,...), (*n*₀,*n*₁,*n*,*n*₃,...), and (*n̅*₀,*n̅*₁,*n̅*₂,*n̅*₃,...):
1. Trigger on the (observed/detected) dead-timed pulse train ${C}_{i}^{t}$ and count the pulses ${C}_{i}^{t}$ in the gate of the dead-timed pulse train as described before: Calculate $M = {\sum }_{t = {t}_{0} + {t}_{1}}^{{t}_{0} + {t}_{2}} {\sum }_{i} {C}_{i}^{t}$ and increase *mM* by ${\sum }_{i} {C}_{i}^{{t}_{0}} .$ This yields the normal dead-time affected multiplicity histogram (*m*₀,*m*₁,*m*₂,*m*₃,...).
   1.1 Trigger on the dead-timed pulse train ${C}_{i}^{t}$ and count the pulses ${l}_{i}^{t}$ in the gate of the estimated lost pulse train: calculate $x = {\sum }_{t = {t}_{0} + {t}_{1}}^{{t}_{0} + {t}_{2}} {\sum }_{i} {l}_{i}^{t}$ and increase *m̅_{M}* by $x ⋅ {\sum }_{i} {C}_{i}^{{t}_{0}} .$ This yields the histogram (*m̅*₀,*m̅*₁,*m̅*₂,*m̅*₃,...) containing the estimated sum of lost pulses in gates with the (dead-timed affected) multiplicity *M-1.* These statistics indicate how the former multiplicity histogram (*m*₀,*m*₁,*m*₂,*m*₃,...) has to be updated later.
2. Trigger on the estimated lost pulse train ${l}_{i}^{t}$ and count the pulses ${C}_{i}^{t}$ in the gate of the observed/detected dead-timed pulse train: as there is always an observed pulse at the same time as an estimated lost pulse, $M = {\sum }_{t = {t}_{0} + {t}_{1}}^{{t}_{0} + {t}_{2}} {\sum }_{i} {C}_{i}^{t}$ from step 1 is used as before. Then, *n̅_{M}* is increased by the sum of triggers on the ELPT ${\sum }_{i} {l}_{i}^{{t}_{0}} .$ This yields a dead-timed multiplicity histogram (*n*₀,*n*₁,*n*,*n*₃,...) for lost triggers/gates which can simply be added to the original, dead-timed histogram.
   2.1 Trigger on the on the estimated lost pulse train ${l}_{i}^{t}$ and count the pulses ${l}_{i}^{t}$ in the gate of the estimated lost pulse train: again one can use the result $x = {\sum }_{t = {t}_{0} + {t}_{1}}^{{t}_{0} + {t}_{2}} {\sum }_{i} {l}_{i}^{t}$ from step 1.1 before. This *x* is weighted with the sum of estimated lost triggers ${\sum }_{i} {l}_{i}^{{t}_{0}} ,$ i.e. to calculate $x ⋅ {\sum }_{i} {l}_{i}^{{t}_{0}} .$ Then increase *n̅_{M}* by $x ⋅ {\sum }_{i} {l}_{i}^{{t}_{0}} .$ This yields the histogram (*n̅*₀,*n̅*₁,*n̅*₂,*n̅*₃,...) containing the average number of lost pulses in lost gates with a certain (dead-timed affected) multiplicity *M-1.* These statistics indicate how the former multiplicity histogram (*n*₀,*n*₁,*n*,*n*₃,...) has to be updated for lost pulses inside its gates, before adding it to the original, dead-timed histogram.

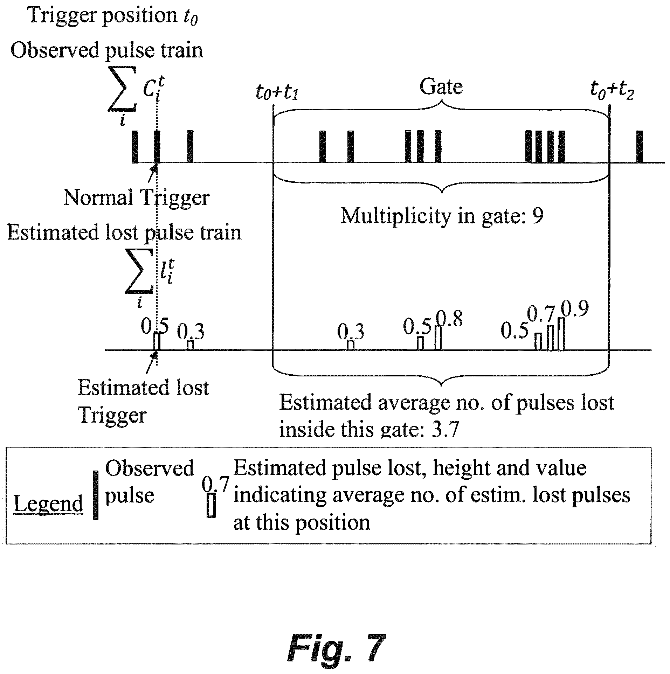

Fig. 7 illustrates multiplicity counting using techniques in accordance with an embodiment of the invention, showing the original dead-timed pulse train ${C}_{i}^{t}$ and the pulse train ${l}_{i}^{t}$ of estimated lost pulses.

In order to visualize the above algorithm description, consider the example shown in **Fig. 7****:** The two pulse trains already represent the sum over the channels: ${\sum }_{i} {C}_{i}^{t}$ for the observed pulse train and ${\sum }_{i} {l}_{i}^{t}$ for the estimated lost pulse train respectively.
1. So the gate for the observed pulses $M = {\sum }_{t = {t}_{0} + {t}_{1}}^{{t}_{0} + {t}_{2}} {\sum }_{i} {C}_{i}^{t} = 9 ,$ and the number of triggers is ${\sum }_{i} {C}_{i}^{{t}_{0}} = 1 ,$ so *m₉* has to be increased by 1.
   1.1 Within the gate for the estimated lost pulse train, the sum of pulses is $x = {\sum }_{t = {t}_{0} + {t}_{1}}^{{t}_{0} + {t}_{2}} {\sum }_{i} {l}_{i}^{t} = 3.7 ,$ so *m̅₉* must be increased by $x ⋅ {\sum }_{i} {C}_{i}^{{t}_{0}} = 3.7 ⋅ 1 = 3.7 .$
2. The sum of estimates of lost triggers ${\sum }_{i} {l}_{i}^{{t}_{0}} = 0.5 ,$ so *n₉* is increased by ${\sum }_{i} {l}_{i}^{{t}_{0}} = 0.5 .$
   2.1 Finally, increase *n̅₉* by $x ⋅ {\sum }_{i} {l}_{i}^{{t}_{0}} = 3.7 ⋅ 0.5 = 1.85 .$

In eqn. 1, the estimation of a lost pulse is calculated for (at least) one reference pulse: reference pulses are those ${C}_{i}^{t}$ in the right hand side of eqn. 1, which have value 1. The above eqn. 1 means that these reference pulses could show up on channel *j* instead of *i*. The likelihood for this is a combination of the pulse loss probability *pⱼ*(*τ*) on channel *j* and its relative efficiency *eᵢ.* However, in this case the reference pulse would have not shown up on channel *i*, but on channel *j*.

Therefore one pulse (the reference pulse) is subtracted from the multiplicity M during the correction: concerning a multiplicity of *M-1* (means *M* minus one reference pulse) in a gate there were *m̅_{M}* missing pulses measured in *m_{M}* such gates. The statistical distribution, how missing pulses are distributed to gates with *M-1* observed pulses (minus reference pulse) follows a Poisson distribution with parameter *m̅_{M}*/*m_{M}* denoted as *Pois*_{[*m̅_{M}*/*m_{M}*]}.

The correction works as follows: a new histogram $\left({m}_{0}^{new},{m}_{1}^{new},{m}_{2}^{new},{m}_{3}^{new},…\right)$ is create and the entries of the histograms (*m*₀,*m*₁,*m*₂,*m*₃,...) and (*n*₀,*n*₁,*n*,*n*₃,...) redistributed to it for all *i* = *0, 1, 2, 3,* ... as follows: ${m}_{i + j}^{new} = {m}_{i + j}^{new} + {m}_{i} ⋅ {Pois}_{\left[{\overline{m}}_{i + 1}/{m}_{i + 1}\right]} \left(j\right) for j = 0 , 1,2 , …$ eqn. 8 ${m}_{i + j}^{new} = {m}_{i + j}^{new} + {n}_{i} ⋅ {Pois}_{\left[{\overline{n}}_{i + 1}/{n}_{i + 1}\right]} \left(j\right) for j = 0 , 1,2 , …$ eqn. 9

The multiplicity histogram $\left({m}_{0}^{new},{m}_{1}^{new},{m}_{2}^{new},{m}_{3}^{new},…\right)$ calculated as described above is now corrected for dead-time loss.

As described in the introduction, usually there are two such histograms built - one for a "R+A gate", an interval └*t*₀ + *t*₁, *t*₀ + *t*₂┘, where *t₁* is small (called pre-delay) and a second histogram for a "A gate", an interval with large *t₁* comprising many times the life time of a neutron in the detector, the difference *t*₂ - *t*₁ being the same as for the "R+A gate".

Fig. 8 shows the procedure for calculating a corrected multiplicity distribution in steps s110 and s112 of Fig. 1. The procedure commences with receiving (step s802) as inputs the dead-timed pulse train ${C}_{i}^{t} ,$ estimated lost pulse train ${l}_{i}^{t}$ and time-distances *t*_{1,} *t*₂.

Thereafter, at step s804, the following operations are performed: for every time *t₀* in the range of the pulse trains ${C}_{i}^{t}$ and ${l}_{i}^{t}$ for which ${\sum }_{i} {C}_{i}^{{t}_{0}} \neq 0$ do:
(i) collect the multiplicity histogram (*m*₀,*m*₁,*m*₂,*m*₃,...) by calculating $M = {\sum }_{t = {t}_{0} + {t}_{1}}^{{t}_{0} + {t}_{2}} {\sum }_{i} {C}_{i}^{t}$ and increasing *m_{M}* by ${\sum }_{i} {C}_{i}^{{t}_{0}}$
(ii) collect the histogram (*m̅*₀,*m̅*₁,*m̅*₂,*m̅*₃,...) by calculating $x = {\sum }_{t = {t}_{0} + {t}_{1}}^{{t}_{0} + {t}_{2}} {\sum }_{i} {l}_{i}^{t}$ and increasing *m̅_{M}* by $x ⋅ {\sum }_{i} {C}_{i}^{{t}_{0}}$ and
   additionally, if ${\sum }_{i} {l}_{i}^{{t}_{0}} \neq 0$ do:
   collect the multiplicity histogram (*n*₀,*n*₁,*n*,*n*₃,...) by increasing *n_{M}* by ${\sum }_{i} {l}_{i}^{{t}_{0}}$
   collect the histogram (*n̅*₀,*n̅*₁,*n̅*₂,*n̅*₃,...) by increasing *n̅*_{M} by $x ⋅ {\sum }_{i} {l}_{i}^{{t}_{0}}$

Then, at step s806, a new, corrected multiplicity histogram $\left({m}_{0}^{new},{m}_{1}^{new},{m}_{2}^{new},{m}_{3}^{new},…\right)$ is created as follows: (i) initially set $\left({m}_{0}^{new},{m}_{1}^{new},{m}_{2}^{new},{m}_{3}^{new},…\right) = \left(0,0,0,0,…\right) ;$ (ii) then re-distribute the entries of the histograms (*m*₀,*m*₁,*m*₂,*m*₃,...) and (*n*₀,*n*₁,*n*,*n*₃,...) to this new histogram according to eqn. 8 and eqn. 9 (where *Pois*_{[*m̅*_{*i*+1}/*m̅*_{*i*+1}]}(*j*) denotes the Poisson distribution with parameter *m̅*_{*i*+1/}*m*_{*i*+1}: ${m}_{i + j}^{new} = {m}_{i + j}^{new} + {m}_{i} ⋅ {Pois}_{\left[{\overline{m}}_{i + 1}/{m}_{i + 1}\right]} \left(j\right) for j = 0 , 1 , 2,3 , …$ ${m}_{i + j}^{new} = {m}_{i + j}^{new} + {n}_{i} ⋅ {Pois}_{\left[{\overline{n}}_{i + 1}/{n}_{i + 1}\right]} \left(j\right) for j = 0 , 1 , 2,3 , …$

Finally, the new, corrected multiplicity histogram $\left({m}_{0}^{new},{m}_{1}^{new},{m}_{2}^{new},{m}_{3}^{new},…\right)$ is output at step s808. Thus, additional information is collected from the pulse trains ${C}_{i}^{t}$ and ${l}_{i}^{t}$ which is used to correct the dead-time affected multiplicity histogram (*m*₀,*m*₁,*m*₂,*m*₃,...) using the Poisson distribution.

The measurement procedure using the dead-time correction method of Fig. 1 yields corrected multiplicity distributions ${\left({m}_{0}^{new},{m}_{1}^{new},{m}_{2}^{new},{m}_{3}^{new},…\right)}^{R + A}$ for the R+A-gate and ${\left({m}_{0}^{new},{m}_{1}^{new},{m}_{2}^{new},{m}_{3}^{new},…\right)}^{A}$ for the A-gate which, used for subsequent calculation, will lead to more precise results than the conventional (*m*₀,*m*₁,*m*₂,*m*₃,...)^{*R*+*A*} and *(m*₀,*m*₁,*m*₂,*m*₃,...)*^{A}* from **Fig. 9****.**

### Practical tests

Software has been implemented by the inventors, embodying the above-described techniques. In testing of the software using simulations it could be demonstrated that
**a)** this new method is accurate for dead-time losses up to 15%, within a few % difference between the estimated and the true pulse loss (i.e. on the basis of the pulse loss, e.g. on the basis of the 15%); and
**b)** pulse rates of 100,000 to 150,000 pulses per second can be processed using a single core of a commercially available Intel i7 processor (further speed-enhancement will be possible using parallelization with multiple cores).

In the following, the main advantages over other methods typically used for dead-time correction in neutron counting are summarized.

Improved precision for high count rate cases: as the techniques according to embodiments of the invention were especially designed for correcting dead-time losses for high count rate cases, it provides improved precision for the estimation of pulse loses due to dead-time for these high and very high count rates and/or high pulse losses due to dead-time, (especially compared to the techniques of EP 2 478 391 B1, for example).

In principle it corrects for any "moment": as (i) the R+A and A multiplicity histograms are used to calculate subsequently the "singles" (total count rate), the "doubles" (number of correlated pulse pairs in the pulse train), "triples" (number of sets of three correlated pulses in the pulse train) and higher order "moments", and (ii) due to the fact that this method directly corrects the R+A and A multiplicity histograms, the techniques according to embodiments of the invention work in principle for correcting the "singles" , "doubles" , "triples" , and higher order "moments".

Reduced or no pre-delav is possible: in principle, the techniques according to embodiments of the invention do not make use of a pre-delay in the classical sense for the "R+A gate" as described above. Since a classical pre-delay (usually 1.5 - 4.5 µs) cuts away the early part of the distribution (as it can be seen on a Rossi-Alpha distribution) giving statistically most of the highest multiplicities, this (qualitatively best) part of the measurement is lost. However, since, up to now, the exact way in which the dead-time loss takes place could not be measured (and differs between detectors), there was no other possibility. Using techniques according to embodiments of the invention the dead-time loss can be measured and this disadvantage can be avoided: the pre-delay can be reduced or even completely avoided, leading to an increased "gate-fraction" and, in principle, improved quality of measurement results.

No prior instrument calibration will be necessary: the calibration is done using the measurement data itself, leading to facilitated measurement procedures. No separate calibration source is necessary.

An instrument incorporating techniques according to embodiments of the invention can be readily implemented: tests using a demo-program based on this method have revealed that 100000 to 150000 pulses per second can be processed using a single core of a commercially available Intel i7 processor. Further speed-up will be possible using parallelization with multiple cores. This will be sufficient to perform the data evaluation in near real time, making it in principle possible to build an instrument which does the correction by itself, thereby facilitating the measurement and evaluation process.

While embodiments have been described by reference to embodiments having various components in their respective implementations, it will be appreciated that other embodiments make use of other combinations and permutations of these and other components.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Thus, while there has been described what are believed to be the preferred embodiments of the invention, those skilled in the art will recognize that other and further modifications may be made thereto without departing from the scope of the invention, as defined by the appended claims.

## Claims

1. A method for pulse multiplicity counting with dead time correction in a particle detector having at least two channels, the method comprising:
a) detecting, in the particle detector, the presence of emitted particles from a sample of material;
b) creating a plurality of detection events corresponding to the emitted particles detected by the particle detector for each channel;
c) converting, in processing circuitry associated with the particle detector, the plurality of detection events into a pulse train ${C}_{i}^{t}$ for each channel, where *i* corresponds to the index of each channel and *t* corresponds to the time for a detected pulse of the pulse train;
d) generating, for each channel, in the processing circuitry, an estimate of lost pulses on the channel with a respective assumed dead time period for each channel;
e) obtaining, from the processing circuitry, for each channel, a relative efficiency of the particle detector with respect to a sum of efficiencies for all channels;
f) deriving, from the processing circuitry, for each channel, a dead-time behaviour of the particle detector by iteratively generating, from the relative efficiency and the estimate of lost pulses, an estimated lost pulse train ${l}_{i}^{t}$ having estimated lost pulses for all channels of the detector; and
g) generating, in the processing circuitry, at least a first corrected histogram $\left({m}_{0}^{new},{m}_{1}^{new},{m}_{2}^{new},{m}_{3}^{new},…\right)$ based on the respective detected pulse train ${C}_{i}^{t}$ and the estimated lost pulse train ${l}_{i}^{t}$ for each channel, the first corrected histogram indicating, for each of a plurality of multiplicities, a respective count.

2. The method according to claim 1, wherein step g) comprises summing, for each channel, the respective detected pulse train ${C}_{i}^{t}$ and the estimated lost pulse train ${l}_{i}^{t} ,$ to thereby generate a corrected pulse train corrected for dead time in the channel of the particle detector.

3. The method according to claim 1 or 2, wherein, for a given channel, step f) comprises:
f1) detecting a pulse on the given channel;
f2) in response to the detected pulse, measuring a count rate on the other channels during the respective assumed dead-time; and
f3) comparing the measured count rate on the given channel with the measured count rate on the other channels to determine a number of lost pulses; and
repeating steps f1) to f3) for each other channel to generate the estimate of lost pulses on the given channel which is an average of the determined numbers of lost pulses.

4. The method according to any one of claims 1 to 3, wherein, for all channels from channel 1 to the maximum number of channels *Ch,* the step of generating the estimated lost pulse train ${\left({l}_{i}^{t},…,{l}_{Ch}^{t}\right)}_{t = 1 , …}$ comprises calculating $\left({l}_{i}^{t},…,{l}_{Ch}^{t}\right)$ as an average by solving for $\left({l}_{i}^{t},…,{l}_{Ch}^{t}\right)$ for each time-step *t* with meaningful (non-zero) right hand side in: $\left(\begin{matrix}\begin{matrix}1 & - \frac{{p}_{1} \left({τ}_{1}\right) {e}_{1}}{1 - {e}_{1}} & … & - \frac{{p}_{1} \left({τ}_{1}\right) {e}_{1}}{1 - {e}_{1}} \\ - \frac{{p}_{2} \left({τ}_{2}\right) {e}_{2}}{1 - {e}_{2}} & 1 & & ⋮ \\ ⋮ & ⋮ & ⋱ & \end{matrix} \\ \begin{matrix}- \frac{{p}_{Ch} \left({τ}_{Ch}\right) {e}_{Ch}}{1 - {e}_{Ch}} & - \frac{{p}_{Ch} \left({τ}_{Ch}\right) {e}_{Ch}}{1 - {e}_{Ch}} & … & 1\end{matrix}\end{matrix}\right) \left(\begin{matrix}{l}_{1}^{t} \\ {l}_{2}^{t} \\ ⋮ \\ {l}_{Ch}^{t}\end{matrix}\right) = \left(\begin{matrix}\frac{{p}_{1} \left({τ}_{1}\right) {e}_{1}}{1 - {e}_{1}} {\sum }_{i \neq 1} {C}_{i}^{t} \\ \frac{{p}_{2} \left({τ}_{2}\right) {e}_{2}}{1 - {e}_{2}} {\sum }_{i \neq 2} {C}_{i}^{t} \\ ⋮ \\ \frac{{p}_{Ch} \left({τ}_{Ch}\right) {e}_{Ch}}{1 - {e}_{Ch}} {\sum }_{i \neq Ch} {C}_{i}^{t}\end{matrix}\right)$ where
${C}_{i}^{t}$ denotes whether there was a pulse observed at channel *i* and time *t*; ${C}_{i}^{t} = 1$ if there was a pulse observed at time *t* at channel *i* and ${C}_{i}^{t} = 0$ else;
*Ch* is the maximum number of channels available;
${l}_{i}^{t}$ denotes the calculated (or estimated) average lost pulse at channel *i* and time *t*;
*eᵢ* denotes the relative efficiency of channel *i* with respect to the sum of all channels and the not dead-time affected pulse train, whereby
${\sum }_{i} {e}_{i} = 1$
*τᵢ* denotes the time which elapsed from the last preceding pulse on channel *i*; and
*pᵢ*(*τ*) denotes a dead-time probability function indicating the probability of a pulse loss due to dead-time on channel *i* depending on the time *τ* which elapsed from the last preceding pulse on that channel.

5. The method according to any claim 4, further comprising obtaining, in the processing circuitry, the dead-time probability functions *pᵢ*(*τ*) by performing a iterative process for gradually adapting the shape of the dead-time probability functions *pᵢ*(*τ*) to derive $\left({l}_{i}^{t},…,{l}_{Ch}^{t}\right)$ for each time-step *t* for a predetermined portion of the respective pulse train.

6. The method according to claim 5, wherein the iterative process comprises, for each channel *i*:
(i) building, using a predetermined portion of a respective detected pulse train, a first same channel Rossi-Alpha distribution ${RA}_{i}^{Obs . S} \left(τ\right)$ of observed pulses where a trigger pulse occurred on channel *i* and pulses only from channel *i* are recorded, and
(ii) building, using the predetermined portion, a first other-channels Rossi-Alpha distribution ${RA}_{i}^{Obs . O} \left(τ\right)$ of observed pulses on channels other than on channel *i,* while a trigger pulse occurred on channel *i*;
(iii) assigning an initial value to an assumed dead-time probability function *pᵢ*(*τ*);
(iv) applying, on the predetermined portion of a respective detected pulse train, the estimation method for lost pulses to calculate an estimated lost pulse train, ELPT, for this portion of the detected pulse train;
(v) while applying the estimation method:
taking for each channel *i* with ${l}_{i}^{t} > 0$ the time-distance *τᵢ* to the last pulse on channel *i* before ${l}_{i}^{t} ;$ and
using only the time-distance *τᵢ* taken, building up a caused Rossi-Alpha distribution ${RA}_{i}^{Est . C} \left(τ\right)$ of estimated lost pulses ${l}_{i}^{t}$ on channel *i* assumed to be caused by the respective trigger pulse;
(vi) using the calculated ELPT and triggering on pulses from the detected pulse train,
(vii) building a second same channel Rossi-Alpha distribution ${RA}_{i}^{Est . S} \left(τ\right) ,$ of estimated lost pulses exclusively on channel *i,* and
(viii) building a second other channels a Rossi-Alpha distribution for estimated lost pulses on channels other than channel *i*;
(ix) calculating a new dead-time probability function ${p}_{i}^{new} \left(τ\right)$ according to: ${p}_{i}^{new} \left(τ\right) = \frac{\frac{{e}_{i}}{1 - {e}_{i}} \left({RA}_{i}^{Obs . S}\left(τ\right)+{RA}_{i}^{Est . O}\left(τ\right)\right) - {RA}_{i}^{Obs . S} \left(τ\right) - \left({RA}_{i}^{Est . S}\left(τ\right)+{RA}_{i}^{Est . C}\left(τ\right)\right)}{{RA}_{i}^{Obs . S} \left(τ\right) + {RA}_{i}^{Est . C} \left(τ\right)}$ and
(x) if a predetermined stopping criterion is not reached, replacing the dead-time probability function *pᵢ*(*τ*) by the new the dead-time probability function ${p}_{i}^{new} \left(τ\right)$ and returning to step (iv), or
(xi) if the predetermined stopping criterion is reached, using ${p}_{i}^{new} \left(τ\right)$ as the dead-time probability function for the channel.

7. The method according to claim 6, wherein the predetermined stopping criterion is that (i): ${max}_{τ} \left(abs\left({\sum }_{i = 1}^{Ch} {e}_{i} ⋅ {p}_{i}^{new} \left(τ\right)-{\sum }_{i = 1}^{Ch} {e}_{i} ⋅ {p}_{i} \left(τ\right)\right)\right) < {10}^{- 6}$ or (ii): ${max}_{τ , i} \left(abs\left({p}_{i}^{new}\left(τ\right)-{p}_{i}\left(τ\right)\right)\right) < {10}^{- 6}$

8. The method according to any one of the preceding claims, wherein step g) comprises:
g1) generating a first histogram (*m*₀,*m*₁,*m*₂,*m*₃,...), the first histogram being a multiplicity histogram based on the detected pulse train ${C}_{i}^{t} ;$
g2) generating a second histogram (*m̅*₀*,m̅*₁,*m̅*₂,*m̅*₃,...) containing the sum of estimated lost pulses with the dead-timed affected multiplicity *M-1*;
g3) generating a third histogram (*n*₀,*n*₁,*n*,*n*₃,...), the third histogram being a multiplicity histogram for lost triggers and/or gate time periods; and/or
g4) generating a fourth histogram (*n̅*₀,*n̅*₁,*n̅*₂,*n̅*₃,...) containing the average number of lost pulses in lost gate time periods with a certain dead-timed affected multiplicity *M-1.*

9. The method according to claim 8, wherein the first corrected histogram ${\left({m}_{0}^{new},{m}_{1}^{new},{m}_{2}^{new},{m}_{3}^{new},…\right)}^{R + A}$ generated using a first gate time period $⌊ {t}_{0} + {t}_{1}^{R + A} , {t}_{0} + {t}_{2}^{R + A} ⌋ ,$ where counting is triggered at time *t₀* and sums up all pulses received during the time period $⌊ {t}_{0} + {t}_{1}^{R + A} , {t}_{0} + {t}_{2}^{R + A} ⌋$└*t*₀ where ${t}_{1}^{R + A}$ and ${t}_{2}^{R + A}$ are fixed offsets from *t₀* and ${t}_{1}^{R + A} < {t}_{2}^{R + A} ,$ and wherein:
step g1) comprises
triggering on the dead-time affected detected pulse train ${C}_{i}^{t} ,$ and
counting the pulses ${C}_{i}^{t}$ in the first gate time period of the detected pulse train ${C}_{i}^{t}$ by calculating $M = {\sum }_{t = {t}_{0} + {t}_{1}}^{{t}_{0} + {t}_{2}} {\sum }_{i} {C}_{i}^{t}$ and increasing *m_{M}* by ${\sum }_{i} {C}_{i}^{{t}_{0}}$
step g2) comprises
triggering on the dead-time affected detected pulse train ${C}_{i}^{t} ,$ and
counting the pulses in the first gate time period of the estimated lost pulse train ${l}_{i}^{t}$ by calculating $x = {\sum }_{t = {t}_{0} + {t}_{1}}^{{t}_{0} + {t}_{2}} {\sum }_{i} {l}_{i}^{t}$ and increasing *m̅_{M}* by $x ⋅ {\sum }_{i} {C}_{i}^{{t}_{0}}$
step g3) comprises
triggering on the ELPT ${l}_{i}^{t} ,$ and
counting the pulses ${C}_{i}^{t}$ in the first gate time period of the detected pulse train using $M = {\sum }_{t = {t}_{0} + {t}_{1}}^{{t}_{0} + {t}_{2}} {\sum }_{i} {C}_{i}^{t}$ from step h1) and increasing *n_{M}* by the sum ${\sum }_{i} {l}_{i}^{{t}_{0}}$ of triggers on the ELPT ${l}_{i}^{t} ;$ and/or
step g4) comprises
triggering on the estimated lost pulse train ${l}_{i}^{t} ,$ and
counting the pulses ${l}_{i}^{t}$ in the first gate time period of the estimated lost pulse train ${l}_{i}^{t}$ using $x = {\sum }_{t = {t}_{0} + {t}_{1}}^{{t}_{0} + {t}_{2}} {\sum }_{i} {l}_{i}^{t}$ from step g2),
weighting *x* with the sum ${\sum }_{i} {l}_{i}^{{t}_{0}}$ of estimated lost triggers, to calculate $x ⋅ {\sum }_{i} {l}_{i}^{{t}_{0}}$ and increasing *n̅_{M}* by $x ⋅ {\sum }_{i} {l}_{i}^{{t}_{0}}$

10. The method according to claim 9, wherein generating the first corrected histogram ${\left({m}_{0}^{new},{m}_{1}^{new},{m}_{2}^{new},{m}_{3}^{new},…\right)}^{R + A}$ comprises:
creating a new histogram ${\left({m}_{0}^{new},{m}_{1}^{new},{m}_{2}^{new},{m}_{3}^{new},…\right)}^{R + A}$ as the first corrected histogram and redistributing the entries of the first histogram (*m*₀,*m*₁,*m*₂,*m*₃,...) and the third histogram (*n*₀,*n*₁,*n*,*n*₃,...) to it for all *i = 0,1,2,3,* ... as follows: $\begin{matrix}{m}_{i + j}^{new} = {m}_{i + j}^{new} + {m}_{i} ⋅ {Pois}_{\left[{\overline{m}}_{i + 1}/{m}_{i + 1}\right]} \left(j\right) \\ for j = 0 , 1,2 , …\end{matrix}$ $\begin{matrix}{m}_{i + j}^{new} = {m}_{i + j}^{new} + {n}_{i} ⋅ {Pois}_{\left[{\overline{n}}_{i + 1}/{n}_{i + 1}\right]} \left(j\right) \\ for j = 0 , 1,2 , …\end{matrix}$ where *Pois*_{[*m̅_{M}*/*m̅_{M}*]} is the Poisson distribution with parameter *m̅_{M}*/*m_{M}.*

11. The method according to any one of claims 8 to 10, wherein the first corrected histogram ${\left({m}_{0}^{new},{m}_{1}^{new},{m}_{2}^{new},{m}_{3}^{new},…\right)}^{R + A}$ corresponds to a "R+A gate", and ${t}_{1}^{R + A}$ is small in the first gate time period $⌊ {t}_{0} + {t}_{1}^{R + A} , {t}_{0} + {t}_{2}^{R + A} ⌋ ,$ and the method further comprises:
performing steps g1) to g4) to generate a second corrected histogram ${\left({m}_{0}^{new},{m}_{1}^{new},{m}_{2}^{new},{m}_{3}^{new},…\right)}^{A}$ in addition to the first corrected histogram ${\left({m}_{0}^{new},{m}_{1}^{new},{m}_{2}^{new},{m}_{3}^{new},…\right)}^{R + A} ,$ wherein the second corrected histogram ${\left({m}_{0}^{new},{m}_{1}^{new},{m}_{2}^{new},{m}_{3}^{new},…\right)}^{A}$ corresponds to a "A gate";
wherein the second corrected histogram ${\left({m}_{0}^{new},{m}_{1}^{new},{m}_{2}^{new},{m}_{3}^{new},…\right)}^{A}$ is generated using a second gate time period $⌊ {t}_{0} + {t}_{1}^{A} , {t}_{0} + {t}_{2}^{A} ⌋ ;$ and
wherein ${t}_{1}^{A}$ is large in the second gate time period $⌊ {t}_{0} + {t}_{1}^{A} , {t}_{0} + {t}_{2}^{A} ⌋ .$└*t*₀

12. The method of any one of the preceding claims, wherein the emitted particles comprise neutrons and the method further comprises the step of neutron multiplicity counting, whereby each detected pulse train is generated by a respective channel of the neutron detector, each pulse in a pulse train corresponding to at least one detected neutron.

13. A pulse counting system for pulse multiplicity counting with dead time correction, the system comprising:
a particle detector having at least two channels configured for detecting the presence of emitted particles in a sample of material and for creating a plurality of detection events; and
a processing circuitry associated with the particle detector and configured for receiving the detection events and for converting the plurality of detection events into a source of pulses for each channel of the particle detector as a detected pulse train, the pulse counting system being **characterized in** the processing circuitry being configured for performing the method of any one of claims 1 to 12.

14. A recordable, rewritable or storable medium having recorded or stored thereon data, which when loaded on processing circuitry, is configured for defining instructions or for transforming the data into instructions for execution by the processing circuitry of the pulse counting system of claim 13 to perform at least the steps of any one of claims 1 to 12.

15. A server computer incorporating a communications device and a memory device, the memory device comprising a recordable, rewritable or storable medium having recorded or stored data therein according to claim 14, the server computer being configured for the transmission on demand or otherwise of the data stored in the memory device to processing circuitry thereby defining instructions or data transformable into instructions for execution by processing circuitry of the pulse counting system of claim 13 when loaded the data is loaded thereon to perform at least the steps of any one of claims 1 to 12.

## Patentansprüche

1. Ein Verfahren zur Impulsmultiplizitätszählung mit Totzeitkorrektur in einem Teilchendetektor, der zumindest zwei Kanäle hat, wobei das Verfahren Folgendes umfasst:
a) Erkennen, im Teilchendetektor, der Anwesenheit von Teilchen, die von einer Materialprobe emittiert wurden;
b) Erstellen einer Vielzahl von Erkennungsereignissen entsprechend der durch den Teilchendetektor erkannten emittierten Teilchen für jeden Kanal;
c) Umwandeln, in einer mit dem Teilchendetektor verbundenen Verarbeitungsschaltung, der Vielzahl von Erkennungsereignissen in eine Impulsfolge ${C}_{i}^{t}$ für jeden Kanal, wobei *i* dem Index jedes Kanals entspricht und *t* der Zeit für einen erkannten Impuls der Impulsfolge entspricht;
d) Erzeugen, für jeden Kanal, in der Verarbeitungsschaltung, einer Schätzung von verlorenen Impulsen auf dem Kanal mit einer zugehörigen angenommenen Totzeitperiode für jeden Kanal;
e) Erhalten, von der Verarbeitungsschaltung, für jeden Kanal, einer relativen Effizienz des Teilchendetektors in Bezug auf eine Summe von Effizienzen für alle Kanäle;
f) Ableiten, von der Verarbeitungsschaltung, für jeden Kanal, eines Totzeitverhaltens des Teilchendetektors durch iteratives Erzeugen, aus der relativen Effizienz und der Schätzung von verlorenen Impulsen, einer Folge von geschätzten verlorenen Impulsen ${l}_{i}^{t}$ mit geschätzten verlorenen Impulsen für alle Kanäle des Detektors; und
g) Erzeugen, in der Verarbeitungsschaltung, von zumindest einem ersten korrigierten Histogramm $\left({m}_{0}^{new},{m}_{1}^{new},{m}_{2}^{new},{m}_{3}^{new},…\right)$ basierend auf der zugehörigen erkannten Impulsfolge ${C}_{i}^{t}$ und der Folge von geschätzten verlorenen Impulsen ${l}_{i}^{t}$ für jeden Kanal, wobei das erste korrigierte Histogramm, für jede der Vielzahl von Multiplizitäten, eine zugehörige Zählung angibt.

2. Das Verfahren nach Anspruch 1, wobei Schritt g), für jeden Kanal, das Addieren der zugehörigen erkannten Impulsfolge ${C}_{i}^{t}$ und der Folge von geschätzten verlorenen Impulsen ${l}_{i}^{t}$ umfasst, um dadurch eine korrigierte Impulsfolge korrigiert um Totzeit im Kanal des Teilchendetektors zu erzeugen.

3. Das Verfahren nach Anspruch 1 oder 2, wobei, für einen bestimmten Kanal, Schritt f) Folgendes umfasst:
f1) Erkennen eines Impulses auf dem bestimmten Kanal;
f2) in Reaktion auf den erkannten Impuls, Messen einer Zählrate auf den anderen Kanälen während der zugehörigen angenommenen Totzeit; und
f3) Vergleichen der gemessenen Zählrate auf dem bestimmten Kanal mit der gemessenen Zählrate auf den anderen Kanälen, um eine Anzahl von verlorenen Impulsen zu bestimmen; und
Wiederholen der Schritte f1) bis f3) für jeden anderen Kanal, um die Schätzung von verlorenen Impulsen auf dem bestimmten Kanal zu erzeugen, die ein Durchschnitt der determinierten Anzahlen von verlorenen Impulsen ist.

4. Das Verfahren nach irgendeinem der Ansprüche 1 bis 3, wobei, für alle Kanäle von Kanal 1 bis zur Höchstzahl von Kanälen *Ch,* der Schritt des Erzeugens der Folge von geschätzten verlorenen Impulsen ${\left({l}_{i}^{t},…,{l}_{Ch}^{t}\right)}_{t = 1 , …}$ das Berechnen von $\left({l}_{i}^{t},…,{l}_{Ch}^{t}\right)$ als einen Durchschnitt umfasst, indem für $\left({l}_{i}^{t},…,{l}_{Ch}^{t}\right)$ für jeden Zeitschritt *t* gelöst wird, mit sinnvoller (ungleich null) rechter Seite in: $\left(\begin{matrix}\begin{matrix}1 & - \frac{{p}_{1} \left({τ}_{1}\right) {e}_{1}}{1 - {e}_{1}} & … & - \frac{{p}_{1} \left({τ}_{1}\right) {e}_{1}}{1 - {e}_{1}} \\ - \frac{{p}_{2} \left({τ}_{2}\right) {e}_{2}}{1 - {e}_{2}} & 1 & & ⋮ \\ ⋮ & ⋮ & ⋱ & \end{matrix} \\ \begin{matrix}- \frac{{p}_{Ch} \left({τ}_{Ch}\right) {e}_{Ch}}{1 - {e}_{Ch}} & - \frac{{p}_{Ch} \left({τ}_{Ch}\right) {e}_{Ch}}{1 - {e}_{Ch}} & … & 1\end{matrix}\end{matrix}\right) \left(\begin{matrix}{l}_{1}^{t} \\ {l}_{2}^{t} \\ ⋮ \\ {l}_{Ch}^{t}\end{matrix}\right) = \left(\begin{matrix}\frac{{p}_{1} \left({τ}_{1}\right) {e}_{1}}{1 - {e}_{1}} {\sum }_{i \neq 1} {C}_{i}^{t} \\ \frac{{p}_{2} \left({τ}_{2}\right) {e}_{2}}{1 - {e}_{2}} {\sum }_{i \neq 2} {C}_{i}^{t} \\ ⋮ \\ \frac{{p}_{Ch} \left({τ}_{Ch}\right) {e}_{Ch}}{1 - {e}_{Ch}} {\sum }_{i \neq Ch} {C}_{i}^{t}\end{matrix}\right)$ wobei
${C}_{i}^{t}$ angibt, ob ein Impuls an Kanal *i* und Zeit *t* beobachtet wurde; ${C}_{i}^{t} = 1 ,$ wenn ein Impuls an Zeit *t* an Kanal *i* beobachtet wurde und andernfalls ist ${C}_{i}^{t} = 0 ;$
*Ch* die Höchstzahl der verfügbaren Kanäle ist;
${l}_{i}^{t}$ den berechneten (oder geschätzten) durchschnittlichen verlorenen Impuls an Kanal *i* und Zeit *t* bezeichnet;
*eᵢ* die relative Effizienz von Kanal *i* in Bezug auf die Summe aller Kanäle und die nicht durch totzeitbeeinflusste Impulsfolge bezeichnet, wobei
${\sum }_{i} {e}_{i} = 1$
*τᵢ* die Zeit bezeichnet, die seit dem letzten vorangegangenen Impuls auf Kanal *i* vergangen ist; und
*pᵢ*(*τ*) eine Totzeit-Wahrscheinlichkeitsfunktion bezeichnet, die die Wahrscheinlichkeit eines Impulsverlustes aufgrund von Totzeit auf Kanal *i* in Abhängigkeit von der Zeit *τ* angibt, die seit dem letzten vorangegangenen Impuls auf diesem Kanal vergangen ist.

5. Das Verfahren nach irgendeinem Anspruch 4, welches ferner, in der Verarbeitungsschaltung, das Erhalten der Totzeit-Wahrscheinlichkeitsfunktionen *pᵢ*(*τ*) umfasst, indem ein iterativer Prozess zum schrittweisen Anpassen der Form der Totzeit-Wahrscheinlichkeitsfunktionen *pᵢ*(*τ*) durchgeführt wird, um $\left({l}_{i}^{t},…,{l}_{Ch}^{t}\right)$ für jeden Zeitschritt *t* für einen vorgegebenen Abschnitt der zugehörigen Impulsfolge abzuleiten.

6. Das Verfahren nach Anspruch 5, wobei der iterative Prozess für jeden Kanal *i* Folgendes umfasst:
(i) Aufbauen, unter Verwendung eines vorgegebenen Abschnitts einer zugehörigen erkannten Impulsfolge, einer ersten Gleichkanal-Rossi-Alpha-Verteilung ${RA}_{i}^{Obs . O} \left(τ\right)$ von beobachteten Impulsen, wo ein Auslöseimpuls auf Kanal *i* aufgetreten ist und Impulse nur von Kanal *i* aufgezeichnet werden, und
(ii) Aufbauen, unter Verwendung des vorgegebenen Abschnitts, einer ersten Anderkanal-Rossi-Alpha-Verteilung ${RA}_{i}^{Obs . O} \left(τ\right)$ von beobachteten Impulsen auf anderen Kanälen als Kanal *i*, während ein Auslöseimpuls auf Kanal *i* auftrat;
(iii) Zuweisen eines Anfangswertes zu einer angenommenen Totzeit-Wahrscheinlichkeitsfunktion *pᵢ*(*τ*);
(iv) Anwenden, auf dem vorgegebenen Abschnitt einer zugehörigen erkannten Impulsfolge, des Schätzungsverfahrens für verlorene Impulse, um eine Folge von geschätzten verlorenen Impulsen, ELPT, für diesen Abschnitt der erkannten Impulsfolge zu berechnen;
(v) während das Schätzungsverfahren angewendet wird:
Aufnehmen, für jeden Kanal *i* mit ${l}_{i}^{t} > 0 ,$ des Zeitabstands τ*ᵢ* zum letzten Impuls auf Kanal *i* vor ${l}_{i}^{t} ;$ und
unter Verwendung nur des aufgenommenen Zeitabstands τ*ᵢ*, Aufbauen einer verursachten Rossi-Alpha-Verteilung ${RA}_{i}^{Est . C} \left(τ\right)$ von geschätzten verlorenen Impulsen ${l}_{i}^{t}$ auf Kanal *i*, die als durch den zugehörigen Auslöseimpuls verursacht betrachtet werden;
(vi) Verwenden der berechneten ELPT und Auslösen von Impulsen von der erkannten Impulsfolge;
(vii) Aufbauen einer zweiten Gleichkanal-Rossi-Alpha-Verteilung ${RA}_{i}^{Est . S} \left(τ\right) ,$ von geschätzten verlorenen Impulsen ausschließlich auf Kanal *i*, und
(viii) Aufbauen einer zweiten Anderkanal-Rossi-Alpha-Verteilung für geschätzte verlorene Impulse auf anderen Kanälen als Kanal *i*;
(ix) Berechnen einer neuen Totzeit-Wahrscheinlichkeitsfunktion ${p}_{i}^{new} \left(τ\right)$ entsprechend: ${p}_{i}^{new} \left(τ\right) = \frac{\frac{{e}_{i}}{1 - {e}_{i}} \left({RA}_{i}^{Obs . S}\left(τ\right)+{RA}_{i}^{Est . O}\left(τ\right)\right) - {RA}_{i}^{Obs . S} \left(τ\right) - \left({RA}_{i}^{Est . S}\left(τ\right)+{RA}_{i}^{Est . C}\left(τ\right)\right)}{{RA}_{i}^{Obs . S} \left(τ\right) + {RA}_{i}^{Est . C} \left(τ\right)}$ und
(x) wenn ein vorgegebenes Stoppkriterium nicht erreicht wird, Ersetzen der Totzeit-Wahrscheinlichkeitsfunktion *pᵢ*(*τ*) durch die neue Totzeit-Wahrscheinlichkeitsfunktion ${p}_{i}^{new} \left(τ\right)$ und Zurückkehren zu Schritt (iv), oder
(xi) wenn das vorgegebene Stoppkriterium erreicht wird, Verwenden von ${p}_{i}^{new} \left(τ\right)$ als die Totzeit-Wahrscheinlichkeitsfunktion für den Kanal.

7. Das Verfahren nach Anspruch 6, wobei das vorgegebene Stoppkriterium ist, dass (i): ${max}_{τ} \left(abs\left({\sum }_{i = 1}^{Ch} {e}_{i} ⋅ {p}_{i}^{new} \left(τ\right)-{\sum }_{i = 1}^{Ch} {e}_{i} ⋅ {p}_{i} \left(τ\right)\right)\right) < {10}^{- 6}$ oder (ii): ${max}_{τ , i} \left(abs\left({p}_{i}^{new}\left(τ\right)-{p}_{i}\left(τ\right)\right)\right) < {10}^{- 6}$

8. Das Verfahren nach irgendeinem der vorigen Ansprüche, wobei Schritt g) Folgendes umfasst:
g1) Erzeugen eines ersten Histogramms (*m*₀,*m*₁,*m*₂,*m*₃,...), wobei das erste Histogramm ein Multiplizitätshistogramm basierend auf der erkannten Impulsfolge ${C}_{i}^{t}$ ist;
g2) Erzeugen eines zweiten Histogramms (*m̅*₀,*m̅*₁, *m̅*₂, *m̅*₃, ...), welches die Summe von geschätzten verlorenen Impulsen mit der totzeitbeeinflussten Multiplizität *M-1* enthält;
g3) Erzeugen eines dritten Histogramms (*n*₀,*n*₁, *n, n*₃, ...), wobei das dritte Histogramm ein Multiplizitätshistogramm für verlorene Auslöser und/oder Gate-Zeiträume ist; und/oder
g4) Erzeugen eines vierten Histogramms (*n̅*₀, *n̅*₁, *n̅*₂, *n̅*₃, ...), welches die durchschnittliche Anzahl von verlorenen Impulsen in verlorenen Gate-Zeiträumen mit einer bestimmten totzeitbeeinflussten Multiplizität *M-1* enthält.

9. Das Verfahren nach Anspruch 8, wobei das erste korrigierte Histogramm ${\left({m}_{0}^{new},{m}_{1}^{new},{m}_{2}^{new},{m}_{3}^{new},…\right)}^{R + A}$ erzeugt wird unter Verwendung eines ersten Gate-Zeitraums $⌊ {t}_{0} + {t}_{1}^{R + A} , {t}_{0} + {t}_{2}^{R + A} ⌋ ,$ wobei das Zählen an Zeit *t*₀ ausgelöst wird und alle Impulse addiert, die während des Zeitraums $⌊ {t}_{0} + {t}_{1}^{R + A} , {t}_{0} + {t}_{2}^{R + A} ⌋$└*t*₀ empfangen werden, wobei ${t}_{1}^{R + A}$ und ${t}_{2}^{R + A}$ fixe Offsets von *t*₀ sind und ${t}_{1}^{R + A} < {t}_{2}^{R + A} ,$ und wobei:
Schritt g1) Folgendes umfasst:
Auslösen der totzeitbeeinflussten erkannten Impulsfolge ${C}_{i}^{t} ,$ und
Zählen der Impulse ${C}_{i}^{t}$ im ersten Gate-Zeitraum der erkannten Impulsfolge ${C}_{i}^{t}$ durch Berechnen von $M = {\sum }_{t = {t}_{0} + {t}_{1}}^{{t}_{0} + {t}_{2}} {\sum }_{i} {C}_{i}^{t}$ und Erhöhen von *m_{M}* um ${\sum }_{i} {C}_{i}^{{t}_{0}}$
Schritt g2) Folgendes umfasst:
Auslösen der totzeitbeeinflussten erkannten Impulsfolge ${C}_{i}^{t} ,$ und
Zählen der Impulse im ersten Gate-Zeitraum der Folge von geschätzten verlorenen Impulsen ${l}_{i}^{t}$ durch Berechnen von $x = {\sum }_{t = {t}_{0} + {t}_{1}}^{{t}_{0} + {t}_{2}} {\sum }_{i} {l}_{i}^{t}$ und Erhöhen von *m̅_{M}* um $x ⋅ {\sum }_{i} {C}_{i}^{{t}_{0}}$
Schritt g3) Folgendes umfasst:
Auslösen der ELPT ${l}_{i}^{t} ,$ und
Zählen der Impulse ${C}_{i}^{t}$ im ersten Gate-Zeitraum der erkannten Impulsfolge unter Verwendung von $M = {\sum }_{t = {t}_{0} + {t}_{1}}^{{t}_{0} + {t}_{2}} {\sum }_{i} {C}_{i}^{t}$ aus Schritt h1) und Erhöhen von *n_{M}* um die Summe ${\sum }_{i} {l}_{i}^{{t}_{0}}$ von Auslösern auf der ELPT ${l}_{i}^{t} ;$ und/oder
Schritt g4) Folgendes umfasst:
Auslösen der Folge von geschätzten verlorenen Impulsen ${l}_{i}^{t} ,$ und
Zählen der Impulse ${l}_{i}^{t}$ im ersten Gate-Zeitraum der Folge von geschätzten verlorenen Impulsen ${l}_{i}^{t}$ unter Verwendung von $x = {\sum }_{t = {t}_{0} + {t}_{1}}^{{t}_{0} + {t}_{2}} {\sum }_{i} {l}_{i}^{t}$ aus Schritt g2),
Gewichten von *x* mit der Summe ${\sum }_{i} {l}_{i}^{{t}_{0}}$ von geschätzten verlorenen Auslösern, um $x ⋅ {\sum }_{i} {l}_{i}^{{t}_{0}}$ zu berechnen und Erhöhen von *n̅_{M}* um $x ⋅ {\sum }_{i} {l}_{i}^{{t}_{0}}$

10. Das Verfahren nach Anspruch 9, wobei das Erzeugen des ersten korrigierten Histogramms ${\left({m}_{0}^{new},{m}_{1}^{new},{m}_{2}^{new},{m}_{3}^{new},…\right)}^{R + A}$ Folgendes umfasst:
Erzeugen eines neuen Histogramms ${\left({m}_{0}^{new},{m}_{1}^{new},{m}_{2}^{new},{m}_{3}^{new},…\right)}^{R + A}$ als erstes korrigiertes Histogramm und Neuverteilen der Einträge des ersten Histogramms (*m*₀, *m*₁, *m*₂, *m*₃, ...), und des dritten Histogramms (*n*₀, *n*₁, *n, n*₃, ...) darauf für alle *i = 0, 1, 2, 3,* ... wie folgt: $\begin{matrix}{m}_{i + j}^{new} = {m}_{i + j}^{new} + {m}_{i} ⋅ {Pois}_{\left[{\overline{m}}_{i + 1}/{m}_{i + 1}\right]} \left(j\right) \\ für j = 0 , 1,2 , …\end{matrix}$ $\begin{matrix}{m}_{i + j}^{new} = {m}_{i + j}^{new} + {n}_{i} ⋅ {Pois}_{\left[{\overline{n}}_{i + 1}/{n}_{i + 1}\right]} \left(j\right) \\ für j = 0 , 1,2 , …\end{matrix}$ wobei *Pois*_{[*m̅_{M}*/*m_{M}*]} die Poisson-Verteilung mit Parameter *m̅_{M}*/*m_{M}* ist.

11. Das Verfahren nach irgendeinem der Ansprüche 8 bis 10, wobei das erste korrigierte Histogramm ${\left({m}_{0}^{new},{m}_{1}^{new},{m}_{2}^{new},{m}_{3}^{new},…\right)}^{R + A}$ einem "R+A-Gate" entspricht, und ${t}_{1}^{R + A}$ im ersten Gate-Zeitraum $⌊ {t}_{0} + {t}_{1}^{R + A} , {t}_{0} + {t}_{2}^{R + A} ⌋$ klein ist, und das Verfahren ferner Folgendes umfasst:
Ausführen der Schritte g1) bis g4), um ein zweites korrigiertes Histogramm ${\left({m}_{0}^{new},{m}_{1}^{new},{m}_{2}^{new},{m}_{3}^{new},…\right)}^{A}$ zusätzlich zum ersten korrigierten Histogramm ${\left({m}_{0}^{new},{m}_{1}^{new},{m}_{2}^{new},{m}_{3}^{new},…\right)}^{R + A}$ zu erzeugen, wobei das zweite korrigierte Histogramm ${\left({m}_{0}^{new},{m}_{1}^{new},{m}_{2}^{new},{m}_{3}^{new},…\right)}^{A}$ einem "A-Gate" entspricht;
wobei das zweite korrigierte Histogramm ${\left({m}_{0}^{new},{m}_{1}^{new},{m}_{2}^{new},{m}_{3}^{new},…\right)}^{A}$ unter Verwendung eines zweiten Gate-Zeitraums $⌊ {t}_{0} + {t}_{1}^{A} , {t}_{0} + {t}_{2}^{A} ⌋$ erzeugt wird; und
wobei ${t}_{1}^{A}$ im zweiten Gate-Zeitraum $⌊ {t}_{0} + {t}_{1}^{A} , {t}_{0} + {t}_{2}^{A} ⌋$ groß ist.

12. Das Verfahren nach irgendeinem der vorigen Ansprüche, wobei die emittierten Teilchen Neutronen umfassen und das Verfahren ferner den Schritt der Neutronenmultiplizitätszählung umfasst, wobei jede erkannte Impulsfolge durch einen zugehörigen Kanal des Neutronendetektors erzeugt wird, wobei jeder Impuls einer Impulsfolge zumindest einem erkannten Neutron entspricht.

13. Ein Impulszählsystem für die Impulsmultiplizitätszählung mit Totzeitkorrektur, wobei das System Folgendes umfasst:
einen Teilchendetektor mit mindestens zwei Kanälen, konfiguriert, um die Anwesenheit von emittierten Teilchen in einer Materialprobe zu erkennen und um eine Vielzahl von Erkennungsereignissen zu erstellen; und
eine Verarbeitungsschaltung verbunden mit dem Teilchendetektor und konfiguriert, um die Erkennungsereignisse zu empfangen und um die Vielzahl von Erkennungsereignissen in eine Quelle von Impulsen für jeden Kanal des Teilchendetektors als eine erkannte Impulsfolge umzuwandeln, wobei das Impulszählsystem **dadurch gekennzeichnet ist, dass** die Verarbeitungsschaltung konfiguriert ist, um das Verfahren nach irgendeinem der Ansprüche 1 bis 12 auszuführen.

14. Ein beschreibbares, überschreibbares oder speicherbares Medium, auf dem Daten geschrieben oder gespeichert sind, welches bei Laden in die Verarbeitungsschaltung konfiguriert ist, um Anweisungen zu definieren oder um die Daten in Anweisungen zur Ausführung durch die Verarbeitungsschaltung des Impulszählsystems nach Anspruch 13 umzuwandeln, um zumindest die Schritte nach irgendeinem der Ansprüche 1 bis 12 auszuführen.

15. Ein Servercomputer, welcher eine Kommunikationsvorrichtung und eine Speichervorrichtung enthält, wobei die Speichervorrichtung ein beschreibbares, überschreibbares oder speicherbares Medium enthält, worauf nach Anspruch 14 Daten geschrieben oder gespeichert sind, wobei der Servercomputer für die Übertragung auf Anfrage oder anderweitig der in der Speichervorrichtung gespeicherten Daten zur Verarbeitungsschaltung konfiguriert ist, wodurch Anweisungen oder Daten definiert werden, die, wenn geladen, in Anweisungen zur Ausführung durch die Verarbeitungsschaltung des Impulszählsystems nach Anspruch 13 umwandelbar sind, wobei die Daten darauf geladen werden, um zumindest die Schritte nach irgendeinem der Ansprüche 1 bis 12 auszuführen.

## Revendications

1. Procédé de décompte d'une multiplicité d'impulsions avec une correction du temps mort dans un détecteur de particules présentant au moins deux canaux, le procédé comprenant :
a) la détection, dans le détecteur de particules, de la présence de particules émises venant d'un échantillon de matériau ;
b) la création d'une pluralité d'événements de détection correspondant aux particules émises détectées par le détecteur de particules pour chaque canal ;
c) la conversion, dans une circuiterie de traitement associée au détecteur de particules, de la pluralité d'événements de détection en un train d'impulsions ${C}_{i}^{t}$ pour chaque canal, où *i* correspond à l'indice de chaque canal et *t* correspond au temps pour une impulsion détectée du train d'impulsions ;
d) la génération, pour chaque canal, dans la circuiterie de traitement, d'une estimation d'impulsions perdues sur le canal avec une période de temps mort supposée respective pour chaque canal ;
e) l'obtention, à partir de la circuiterie de traitement, pour chaque canal, d'un rendement relatif du détecteur de particules par rapport à une somme de rendements pour tous les canaux ;
f) la déduction, par la circuiterie de traitement, pour chaque canal, d'un comportement de temps mort du détecteur de particules par génération itérative, à partir du rendement relatif et de l'estimation d'impulsions perdues, d'un train d'impulsions perdues estimées ${l}_{i}^{t}$ présentant des impulsions perdues estimées pour tous les canaux du détecteur ; et
g) la génération, dans la circuiterie de traitement, d'au moins un premier histogramme corrigé $\left({m}_{0}^{new},{m}_{1}^{new},{m}_{2}^{new},{m}_{3}^{new},…\right)$ sur la base du train d'impulsions détectées respectives ${C}_{i}^{t}$ et du train d'impulsions perdues estimées ${l}_{i}^{t}$ pour chaque canal, le premier histogramme corrigé indiquant un décompte respectif pour chacune d'une pluralité de multiplicités.

2. Procédé selon la revendication 1, dans lequel l'étape g) comprend la sommation, pour chaque canal, du train d'impulsions respectives détectées ${C}_{i}^{t}$ et du train d'impulsions perdues estimées ${l}_{i}^{t} ,$ pour générer de la sorte un train d'impulsions corrigé corrigé pour le temps mort dans le canal du détecteur de particules.

3. Procédé selon la revendication 1 ou 2, dans lequel, pour un canal donné, l'étape f) comprend :
f1) la détection d'une impulsion sur le canal donné ;
f2) en réponse à l'impulsion détectée, la mesure d'un taux de décompte sur les autres canaux au cours du temps mort supposé respectif ; et
f3) la comparaison du taux de décompte mesuré sur le canal donné au taux de décompte mesuré sur les autres canaux pour déterminer un nombre d'impulsions perdues ; et
la répétition des étapes f1) à f3) pour chaque autre canal afin de générer l'estimation d'impulsions perdues sur le canal donné qui est une moyenne des nombres déterminés d'impulsions perdues.

4. Procédé selon l'une quelconque des revendications 1 à 3, dans lequel, pour tous les canaux allant du canal 1 au nombre maximal de canaux Ch, l'étape de génération du train d'impulsions perdues estimées ${\left({l}_{i}^{t},…,{l}_{Ch}^{t}\right)}_{t = 1}$ comprend le calcul de $\left({l}_{i}^{t},…,{l}_{Ch}^{t}\right)$ en tant que moyenne par résolution de $\left({l}_{i}^{t},…,{l}_{Ch}^{t}\right)$ pour chaque étape de temps *t* avec un côté droit significatif (non nul) dans : $\left(\begin{matrix}1 & - \frac{{p}_{1} \left({τ}_{1}\right) {e}_{1}}{1 - {e}_{1}} & … & - \frac{{p}_{1} \left({τ}_{1}\right) {e}_{1}}{1 - {e}_{1}} \\ - \frac{{p}_{2} \left({τ}_{2}\right) {e}_{2}}{1 - {e}_{2}} & 1 & & ⋮ \\ ⋮ & ⋮ & ⋱ & \\ - \frac{{p}_{Ch} \left({τ}_{Ch}\right) {e}_{Ch}}{1 - {e}_{Ch}} & - \frac{{p}_{Ch} \left({τ}_{Ch}\right) {e}_{Ch}}{1 - {e}_{Ch}} & … & 1\end{matrix}\right) \left(\begin{matrix}{l}_{1}^{t} \\ {l}_{2}^{t} \\ ⋮ \\ {l}_{Ch}^{t}\end{matrix}\right) = \left(\begin{matrix}\frac{{p}_{1} \left({τ}_{1}\right) {e}_{1}}{1 - {e}_{1}} {\sum }_{i \neq 1} {C}_{i}^{t} \\ \frac{{p}_{2} \left({τ}_{2}\right) {e}_{2}}{1 - {e}_{2}} {\sum }_{i \neq 2} {C}_{i}^{t} \\ ⋮ \\ \frac{{p}_{Ch} \left({τ}_{Ch}\right) {e}_{Ch}}{1 - {e}_{Ch}} {\sum }_{i \neq Ch} {C}_{i}^{t}\end{matrix}\right)$ où :
${C}_{i}^{t}$ indique s'il y a eu une impulsion observée au canal *i* et au temps *t* ;
${C}_{i}^{t} = 1$ s'il y a eu une impulsion observée au temps *t* au canal *i* et ${C}_{i}^{t} = 0$ autrement ;
*Ch* est le nombre maximal de canaux disponibles ;
${l}_{i}^{t}$ désigne l'impulsion perdue moyenne calculée (ou estimée) au canal *i* et au temps *t ;*
*eᵢ* désigne le rendement relatif du canal *i* par rapport à la somme de tous les canaux et du train d'impulsions non affecté par le temps mort, selon lequel : ${\sum }_{i} {e}_{i} = 1$
*τᵢ* désigne le temps qui s'est écoulé depuis la dernière impulsion précédente sur le canal *i* ; et
*pᵢ(τ)* désigne une fonction de probabilité de temps mort indiquant la probabilité d'une perte d'impulsions en raison d'un temps mort sur le canal *i* en fonction du temps *τ* qui s'est écoulé depuis la dernière impulsion précédente sur ce canal.

5. Procédé selon l'une quelconque revendication 4, comprenant en outre l'obtention, dans la circuiterie de traitement, des fonctions de probabilité de temps mort *pᵢ(τ)* en effectuant un procédé itératif pour adapter graduellement la forme des fonctions de probabilité de temps mort *pᵢ(τ)* pour en tirer $\left({l}_{i}^{t},…,{l}_{Ch}^{t}\right)$ pour chaque étape de temps *t* pour une partie prédéterminée du train d'impulsions respectives.

6. Procédé selon la revendication 5, dans lequel le procédé itératif comprend pour chaque canal *i* :
(i) la construction, en utilisant une partie prédéterminée d'un train d'impulsions détectées respectives, d'une première distribution de Rossi-Alpha de même canal ${RA}_{i}^{Obs . S} \left(τ\right)$ d'impulsions observées lorsqu'une impulsion de déclenchement s'est produite sur un canal *i* et que seules des impulsions du canal *i* sont enregistrées, et
(ii) la construction, en utilisant la partie prédéterminée, d'une première distribution de Rossi-Alpha d'autres canaux ${RA}_{i}^{Obs . O} \left(τ\right)$ d'impulsions observées sur des canaux autres que sur le canal *i*, tandis qu'une impulsion de déclenchement s'est produite sur le canal *i* ;
(iii) l'attribution d'une valeur initiale à une fonction de probabilité de temps mort supposée *pᵢ(τ)* ;
(iv) l'application, sur la partie prédéterminée d'un train d'impulsions détectées respectives, du procédé d'estimation pour des impulsions perdues afin de calculer un train d'impulsions perdues estimées, ELPT, pour cette partie du train d'impulsions détectées ;
(v) tout en appliquant le procédé d'estimation :
la prise pour chaque canal *i* avec ${l}_{i}^{t} > 0$ de la distance-temps *τᵢ* à la dernière impulsion sur le canal *i* avant ${l}_{i}^{t} ;$ et
en utilisant uniquement la distance-temps *τᵢ* prise, la construction d'une distribution de Rossi-Alpha provoquée ${RA}_{i}^{Est . C} \left(τ\right)$ d'impulsions perdues estimées ${l}_{i}^{t}$ sur le canal *i* qui sont censées être provoquées par l'impulsion de déclenchement respective ;
(vi) l'utilisation de l'ELPT calculé et le déclenchement d'impulsions depuis le train d'impulsions détectées,
(vii) la construction d'une deuxième distribution de Rossi-Alpha d'un même canal ${RA}_{i}^{Est . S} \left(τ\right)$ d'impulsions perdues estimées exclusivement sur le canal *i*, et
(viii) la construction d'une deuxième distribution de Rossi-Alpha d'autres canaux pour des impulsions perdues estimées sur des canaux autres que le canal *i* ;
(ix) le calcul d'une nouvelle fonction de probabilité de temps mort ${p}_{i}^{new} \left(τ\right)$ selon la formule : ${p}_{i}^{new} \left(τ\right) = \frac{\frac{{e}_{i}}{1 - {e}_{i}} \left({RA}_{i}^{Obs . S}\left(τ\right)+{RA}_{i}^{Est . O}\left(τ\right)\right) - {RA}_{i}^{Obs . S} \left(τ\right) - \left({RA}_{i}^{Est . S}\left(τ\right)+{RA}_{i}^{Est . C}\left(τ\right)\right)}{{RA}_{i}^{Obs . S} \left(τ\right) + {RA}_{i}^{Est . C} \left(τ\right)}$ et
(x) si un critère d'arrêt prédéterminé n'est pas atteint, le remplacement de la fonction de probabilité de temps mort *pᵢ(τ)* par la nouvelle fonction de probabilité de temps mort ${p}_{i}^{new} \left(τ\right)$ et le retour à l'étape (iv) ou
(xi) si le critère d'arrêt prédéterminé est atteint, l'utilisation de ${p}_{i}^{new} \left(τ\right)$ comme fonction de probabilité de temps mort pour le canal.

7. Procédé selon la revendication 6, dans lequel le critère d'arrêt prédéterminé est celui indiqué par (i) : ${max}_{τ} \left(abs\left({\sum }_{i = 1}^{Ch} {e}_{i} ⋅ {p}_{i}^{new} \left(τ\right)-{\sum }_{i = 1}^{Ch} {e}_{i} ⋅ {p}_{i} \left(τ\right)\right)\right) < {10}^{- 6}$ ou (ii) : ${max}_{τ , i} \left(abs\left({p}_{i}^{new}\left(τ\right)-{p}_{i}\left(τ\right)\right)\right) < {10}^{- 6}$

8. Procédé selon l'une quelconque des revendications précédentes, dans lequel l'étape g) comprend :
g1) la génération d'un premier histogramme (*m₀, m₁, m₂, m₃,...*), le premier histogramme étant un histogramme de multiplicité basé sur le train d'impulsions détectées ${C}_{i}^{t} ;$
g2) la génération d'un deuxième histogramme (*̅m̅*̅₀̅, *̅m̅*̅₁̅, *̅m̅*̅₂̅, *̅m̅*̅₃̅*,* ...) contenant la somme d'impulsions perdues estimées avec la multiplicité affectée par le temps mort *M-1 ;*
g3) la génération d'un troisième histogramme (*n₀, n₁, n₂, n₃,* ...), le troisième histogramme étant un histogramme de multiplicité pour des déclenchements perdus et/ou des périodes de temps de porte perdues ; et/ou
g4) la génération d'un quatrième histogramme (*̅n̅*̅₀̅,̅ *̅n̅*̅₁̅,̅ *̅n̅*̅₂̅,̅ *̅n̅*̅₃̅,̅ ...) contenant le nombre moyen d'impulsions perdues dans des périodes de temps de porte perdues avec une certaine multiplicité affectée par le temps mort *M-1.*

9. Procédé selon la revendication 8, dans lequel le premier histogramme corrigé ${\left({m}_{0}^{new},{m}_{1}^{new},{m}_{2}^{new},{m}_{3}^{new},…\right)}^{R + A}$ est généré en utilisant une première période de temps de porte $\left[{t}_{0}+{t}_{1}^{R + A},{t}_{0}+{t}_{2}^{R + A}\right] ,$ où le décompte est déclenché au temps *t₀* et totalise toutes les impulsions reçues au cours de la période de temps $\left[{t}_{0}+{t}_{1}^{R + A},{t}_{0}+{t}_{2}^{R + A}\right]$ où ${t}_{1}^{R + A}$ et ${t}_{2}^{R + A}$ sont des décalages fixes à partir de *t₀* et ${t}_{1}^{R + A} < {T}_{2}^{R + A} ,$ et dans lequel :
l'étape g1) comprend :
le déclenchement du train d'impulsions détectées affecté par le temps mort ${C}_{i}^{t} ,$ et
le décompte des impulsions ${C}_{i}^{t}$ dans la première période de temps de porte du train d'impulsions détectées ${C}_{i}^{t}$ en calculant : $M = {\sum }_{t = {t}_{0} + {t}_{1}}^{{t}_{0} + {t}_{2}} {\sum }_{i} {C}_{i}^{t}$
et en augmentant *m_{M}* par : ${\sum }_{i} {C}_{i}^{{t}_{0}}$
l'étape g2) comprend :
le déclenchement du train d'impulsions détectées affecté par le temps mort ${C}_{i}^{t} ,$ et
le décompte des impulsions dans la première période de temps de porte du train d'impulsions perdues estimées ${l}_{i}^{t}$ en calculant : $x = {\sum }_{t = {t}_{0} + {t}_{1}}^{{t}_{0} + {t}_{2}} {\sum }_{i} {l}_{i}^{t}$
et en augmentant *m̅_̅{̅M̅}̅* par : $x ⋅ {\sum }_{i} {C}_{i}^{{t}_{0}}$
l'étape g3) comprend :
le déclenchement de l'ELPT ${l}_{i}^{t} ,$ et
le décompte des impulsions ${C}_{i}^{t}$ dans la première période de temps de porte du train d'impulsions détectées en utilisant $M = {\sum }_{t = {t}_{0} + {t}_{1}}^{{t}_{0} + {t}_{2}} {\sum }_{i} {C}_{i}^{t}$
à partir de l'étape h1) et en augmentant *n_{M}* par la somme : ${\sum }_{i} {l}_{i}^{{t}_{0}}$
de déclenchements de l'ELPT ${l}_{i}^{t} ;$ et/ou
l'étape g4) comprend :
le déclenchement du train d'impulsions perdues estimées ${l}_{i}^{t}$ et
le décompte des impulsions ${l}_{i}^{t}$ dans la première période de temps de porte du train d'impulsions perdues estimées ${l}_{i}^{t}$ en utilisant : $x = {\sum }_{t = {t}_{0} + {t}_{1}}^{{t}_{0} + {t}_{2}} {\sum }_{i} {l}_{i}^{t}$
venant de l'étape g2),
la pondération x avec la somme : ${\sum }_{i} {l}_{i}^{{t}_{0}}$
de déclenchements perdus estimés, afin de calculer : $x ⋅ {\sum }_{i} {l}_{i}^{{t}_{0}}$
et en augmentant *n̅_̅{̅M̅}̅* par : $x ⋅ {\sum }_{i} {l}_{i}^{{t}_{0}}$

10. Procédé selon la revendication 9, dans lequel la génération du premier histogramme corrigé ${\left({m}_{0}^{new},{m}_{1}^{new},{m}_{2}^{new},{m}_{3}^{new},…\right)}^{R + A}$ comprend :
la création d'un nouvel histogramme ${\left({m}_{0}^{new},{m}_{1}^{new},{m}_{2}^{new},{m}_{3}^{new},…\right)}^{R + A}$ en tant que premier histogramme corrigé et la redistribution des entrées du premier histogramme (*m₀, m₁, m₂, m₃,*...) et du troisième histogramme (*n₀, n₁, n, n₃,* ...) dans celui-ci pour tous les *i* = 0, *1, 2, 3,* ... comme suit : $\begin{matrix}{m}_{i + j}^{new} = {m}_{i + j}^{new} + {m}_{i} ⋅ {Pois}_{\left[\frac{{\overline{m}}_{i + 1}}{{m}_{i + 1}}\right]} \left(j\right) \\ pour j = 0 , 1,2 , …\end{matrix}$ $\begin{matrix}{m}_{i + j}^{new} = {m}_{i + j}^{new} + {n}_{i} ⋅ {Pois}_{\left[\frac{{\overline{n}}_{i + 1}}{{n}_{i + 1}}\right]} \left(j\right) \\ pour j = 0 , 1,2 , …\end{matrix}$ où *Pois*_{[*m̅_{M}*/*m_{M}*]} est la distribution de Poisson avec le paramètre *m̅_{M}*/*m_{M}.*

11. Procédé selon l'une quelconque des revendications 8 à 10, dans lequel le premier histogramme corrigé ${\left({m}_{0}^{new},{m}_{1}^{new},{m}_{2}^{new},{m}_{3}^{new},…\right)}^{R + A}$ correspond à une « porte R+A » et ${t}_{1}^{R + A}$ est petit dans la première période de temps de porte $\left[{t}_{0}+{t}_{1}^{R + A},{t}_{0}+{t}_{2}^{R + A}\right]$ et le procédé comprend en outre :
la réalisation des étapes g1) à g4) pour générer un deuxième histogramme corrigé ${\left({m}_{0}^{new},{m}_{1}^{new},{m}_{2}^{new},{m}_{3}^{new},…\right)}^{A}$ en plus du premier histogramme corrigé ${\left({m}_{0}^{new},{m}_{1}^{new},{m}_{2}^{new},{m}_{3}^{new},…\right)}^{R + A} ,$ dans lequel le deuxième histogramme corrigé ${\left({m}_{0}^{new},{m}_{1}^{new},{m}_{2}^{new},{m}_{3}^{new},…\right)}^{A}$ correspond à une « porte A » ;
dans lequel le deuxième histogramme corrigé ${\left({m}_{0}^{new},{m}_{1}^{new},{m}_{2}^{new},{m}_{3}^{new},…\right)}^{A}$ est généré en utilisant une deuxième période de temps de porte $\left[{t}_{0}+{t}_{1}^{A},{t}_{0}+{t}_{2}^{A}\right] ;$ et
dans lequel ${t}_{1}^{A}$ est grand dans la deuxième période de temps de porte $\left[{t}_{0}+{t}_{1}^{A},{t}_{0}+{t}_{2}^{A}\right] .$[*t*₀

12. Procédé selon l'une quelconque des revendications précédentes, dans lequel les particules émises comprennent des neutrons et le procédé comprend en outre l'étape de décompte de la multiplicité de neutrons, selon laquelle chaque train d'impulsions détectées est généré par un canal respectif du détecteur de neutrons, chaque impulsion d'un train d'impulsions correspondant à au moins un neutron détecté.

13. Système de décompte d'impulsions pour un décompte de multiplicité d'impulsions avec une correction du temps mort, le système comprenant :
un détecteur de particules présentant au moins deux canaux configurés pour détecter la présence de particules émises dans un échantillon de matériau et pour créer une pluralité d'événements de détection ; et
une circuiterie de traitement associée au détecteur de particules et configurée pour recevoir les événements de détection et pour convertir la pluralité d'événements de détection en une source d'impulsions pour chaque canal du détecteur de particules en tant que train d'impulsions détectées, le système de décompte d'impulsions étant **caractérisé en ce que** la circuiterie de traitement est configurée pour effectuer le procédé selon l'une quelconque des revendications 1 à 12.

14. Support enregistrable, réinscriptible ou stockable sur lequel sont enregistrées ou stockées des données qui, lorsqu'elles sont chargées sur une circuiterie de traitement, sont configurées pour définir des instructions ou pour transformer les données en instructions à des fins d'exécution par la circuiterie de traitement du système de décompte d'impulsions selon la revendication 13 afin d'effectuer au moins les étapes de l'une quelconque des revendications 1 à 12.

15. Ordinateur serveur incorporant un dispositif de communications et un dispositif de mémoire, le dispositif de mémoire comprenant un support enregistrable, réinscriptible ou stockable sur lequel sont enregistrées ou stockées des données selon la revendication 14, l'ordinateur serveur étant configuré pour la transmission à la demande ou autrement des données stockées dans le dispositif de mémoire à une circuiterie de traitement, en définissant ainsi des instructions ou des données transformables en instructions à des fins d'exécution par une circuiterie de traitement du système de décompte d'impulsions selon la revendication 13 lorsqu'elles sont chargées, les données y étant chargées pour effectuer au moins les étapes de l'une quelconque des revendications 1 à 12.
